# EUROPEAN PATENT APPLICATION

(11) **EP 4 325 356 A1**
(43) Date of publication of application: **21.02.2024**
(21) Application number: 22814986.0
(22) Date of filing: 11.05.2022
(51) Int. Cl.: G06F 9/451

(54) **DESKTOP SHARING METHOD AND ELECTRONIC DEVICE**

(30) Priority: 31.05.2021 CN 202110597533
(71) Applicant: Huawei Technologies Co., Ltd., Longgang Shenzhen, Guangdong 518129 (CN)
(72) Inventor: ZHANG, Yanan, Shenzhen, Guangdong 518129 (CN); WANG, Hongjun, Shenzhen, Guangdong 518129 (CN); HOU, Zhe, Shenzhen, Guangdong 518129 (CN); XU, Chao, Shenzhen, Guangdong 518129 (CN)
(74) Representative: Gill Jennings & Every LLP
(86) International application number: PCT/CN2022/092139
(87) International publication number: WO 2022/252939

(57) **Abstract**

This application provides a home screen sharing method and an electronic device. The method is applied to the electronic device. The electronic device and another electronic device may form an electronic device group. The electronic device may synchronize home screen information of another electronic device group in the electronic device group. The electronic device may adjust a home screen based on the home screen information, to meet a requirement of a user for centrally managing home screens of a plurality of electronic devices, save time of the user, and improve user experience.

## Description

This application claims priority to Chinese Patent Application No. 202110597533.2, filed with the China National Intellectual Property Administration on May 31, 2021 and entitled "HOME SCREEN SHARING METHOD AND ELECTRONIC DEVICE", which is incorporated herein by reference in its entirety.

### TECHNICAL FIELD

This application relates to the field of electronic devices, and more specifically, to a home screen sharing method and an electronic device.

### BACKGROUND

As a quantity of electronic devices owned by a user increases, when the user uses a same application on a plurality of electronic devices, the user needs to download the application on each electronic device, or the user needs to operate each electronic device to perform personalized setting. Therefore, the user needs to spend a lot of time in managing home screens of different electronic devices, which affects user experience and operation efficiency.

### SUMMARY

This application provides a home screen sharing method and an electronic device. According to the method, home screens of different electronic devices can be shared, to meet a requirement of a user for centrally managing the home screens of the different electronic devices.

According to a first aspect, a home screen sharing method is provided. The method is applied to a first electronic device, and the method includes: obtaining information about a first application, where the first application is installed on a second electronic device, and the first electronic device is connected to the second electronic device; and displaying a first icon on a home screen of the first electronic device based on the information about the first application, where the icon is used to open the first application installed on the second electronic device.

Specifically, the first electronic device may be connected to the second electronic device through a server, or the first electronic device may be directly connected to the second electronic device.

In this embodiment of this application, a plurality of electronic devices may share an application. After an application is installed on one electronic device, an icon of the application may be displayed on another electronic device. Therefore, a user can use the application on the another electronic device without downloading and installing the application on the another electronic device through AppGallery, to save time of the user.

With reference to the first aspect, in some implementations of the first aspect, the first icon includes a thumbnail of the second electronic device.

Specifically, a thumbnail identifying the second electronic device is displayed in a lower right corner of the first icon.

Alternatively, a display form of the first icon may be highlight display, grayscale display, or shadow display.

With reference to the first aspect, in some implementations of the first aspect, the method further includes: receiving a first operation of tapping the first icon by a user; and in response to the first operation, obtaining interface information of the first application running on the second electronic device, and displaying an interface of the first application on the first electronic device based on the interface information of the first application.

Specifically, after receiving the first operation of tapping the first icon by the user, the first electronic device may be connected to the second electronic device, obtain the interface information of the first application in the second electronic device, and display the interface of the first application in the first electronic device in a projection display manner.

With reference to the first aspect, in some implementations of the first aspect, the method further includes: receiving a first operation of tapping the first icon by a user; installing the first application on the first electronic device in response to the first operation; and running the first application and displaying an interface of the first application on the first electronic device.

Specifically, after the first electronic device receives the first operation of tapping the first icon by the user, the first electronic device may display the interface of the first application after installing the first application.

When the first electronic device installs the first application, the first electronic device may download installation data of the first application through AppGallery, or the second electronic device sends the installation data of the first application to the first electronic device.

It should be noted that, the first electronic device may determine, based on a distance between the first electronic device and the second electronic device, a manner of displaying the interface of the first application. When the distance between the first electronic device and the second electronic device is less than a preset distance, the first electronic device may be connected to the second electronic device, and display the interface of the first application through projection. When the distance between the first electronic device and the second device is greater than the preset distance, the first electronic device may display the interface of the first application after installing the first application.

It should be understood that the user may choose, based on a requirement, whether to display the interface of the first application through projection. When the user presets that the interface of the first application is not displayed through projection, even if the distance between the first electronic device and the second electronic device is less than the preset distance, the interface of the first application is not displayed through projection.

With reference to the first aspect, in some implementations of the first aspect, the home screen includes a first page, the first page includes a first icon of the first application and a second icon of a second application, and the second application is installed on the first electronic device.

With reference to the first aspect, in some implementations of the first aspect, the home screen further includes a first identifier of the second electronic device; and in response to a second operation performed by the user on the first identifier, the home screen displays the first icon of the first application installed on the second electronic device, and does not display the second icon of the second application installed on the first electronic device.

In this embodiment of this application, the first electronic device may quickly classify application icons by using an identifier of the electronic device, and the user may search for an application based on a source of the electronic device.

With reference to the first aspect, in some implementations of the first aspect, the home screen includes a first page and a second page, the first page is used to display a first icon of the first application installed on the second electronic device, and the second page is used to display a second icon of a second application installed on the first electronic device.

In this embodiment of this application, the first electronic device displays icons of applications from different electronic devices on pages, so that the user can quickly search for a local application and an application on another electronic device.

With reference to the first aspect, in some implementations of the first aspect, the method further includes: receiving a third operation performed by the user on the first icon; displaying a first list in response to the third operation, where the first list includes a first option; and installing the first application on the first electronic device in response to a fourth operation performed by the user on the first option.

For example, the third operation may be that the user touches and holds the first icon.

With reference to the first aspect, in some implementations of the first aspect, the method further includes: receiving a fifth operation performed by the user on the first icon; displaying a second list in response to the fifth operation, where the second list includes a second option; and skipping displaying the first icon on the first electronic device in response to a sixth operation performed by the user on the second option; or uninstalling the first application installed on the second electronic device.

For example, the fifth operation may be that the user touches and holds the first icon.

With reference to the first aspect, in some implementations of the first aspect, the method further includes: displaying a third icon of a third application on the home screen, where the third application is installed on the first electronic device and the second electronic device; displaying a third list in response to a seventh operation performed by a user on the third icon, where the third list includes a third option and a fourth option, the first option is used to open the third application installed on the first electronic device, and the second option is used to open the third application installed on the second electronic device; if an eighth operation performed by the user on the third option is detected, running the third application and displaying an interface of the third application on the first electronic device; and if a ninth operation performed by the user on the fourth option is detected, obtaining interface information of the third application running on the second electronic device, and displaying the interface of the third application on the first electronic device based on the interface information of the third application.

For example, the seventh operation may be that the user touches and holds the first icon.

With reference to the first aspect, in some implementations of the first aspect, the third list further includes a fifth option, and the fifth option is used to uninstall the third application.

With reference to the first aspect, in some implementations of the first aspect, the uninstalling the third application includes: uninstalling the third application installed on the first electronic device; uninstalling the third application installed on the second electronic device; uninstalling the third application installed on the first electronic device and the third application installed on the second electronic device, and skipping displaying the third icon on the first electronic device; uninstalling the third application installed on the first electronic device, and further displaying the third icon on the first electronic device, where the third icon is used to open the third application installed on the second electronic device; or uninstalling the third application installed on the first electronic device, and skipping displaying the third icon on the first electronic device.

In this embodiment of this application, when the user uninstalls an application, the user does not need to perform an uninstallation operation on different electronic devices one by one, and can uninstall an application on another device on the first electronic device, to save time of the user.

With reference to the first aspect, in some implementations of the first aspect, the method further includes: obtaining information about a fourth application and information about a fifth application, where the fourth application and the fifth application are installed on the second electronic device, and a fourth icon of the fourth application and a fifth icon of the fifth application are displayed in a same folder of the second electronic device; and displaying a folder on the home screen of the first electronic device, where the folder includes a sixth icon of the fourth application and a seventh icon of the fifth application.

In this embodiment of this application, personalized information such as a home screen layout and classification information of an application may be synchronized between electronic devices that form an electronic device group. After the user performs personalized setting on one electronic device, another electronic device may automatically complete the personalized setting, to save time of the user.

With reference to the first aspect, in some implementations of the first aspect, the method further includes: connecting the first electronic device to a display; displaying an interface on the display, where the interface includes an identifier of the first electronic device; and displaying, by the first electronic device, the home screen of the first electronic device on the display if an operation of tapping the identifier by the user is detected.

With reference to the first aspect, in some implementations of the first aspect, the method further includes: displaying, by the first electronic device on the first page based on a home screen layout of the second electronic device, an icon of an application installed on the second electronic device.

With reference to the first aspect, in some implementations of the first aspect, the method further includes: displaying, by the first electronic device, an exit interface if an operation performed by the user to indicate to disconnect from the second electronic device is detected, where the exit interface includes a sixth option and/or a seventh option and/or an eighth option, the sixth option is used to log out of an account of the first application, the seventh option is used to uninstall data stored by the second electronic device in the first electronic device, and the eighth option is used to uninstall the first application.

In this embodiment of this application, when logging out of the electronic device group, the user may choose to log out of the account of the first application, delete data of the electronic device group, uninstall the first application, and does not need to perform an operation on different electronic devices one by one, to save time of the user and uninstall information more completely.

According to a second aspect, an embodiment of this application provides an electronic device. The electronic device includes modules/units that perform the method according to any one of the first aspect or the possible designs of the first aspect. These modules/units may be implemented by hardware, or may be implemented by hardware executing corresponding software.

According to a third aspect, an embodiment of this application provides a chip. The chip is coupled to a memory in an electronic device, and is configured to: invoke a computer program stored in the memory and execute the technical solution according to any one of the first aspect or the possible designs of the first aspect in embodiments of this application. In this embodiment of this application, "coupling" means that two components are directly or indirectly combined with each other.

According to a fourth aspect, an embodiment of this application provides a computer-readable storage medium. The computer-readable storage medium includes a computer program, and when the computer program is run on an electronic device, the electronic device is enabled to perform the technical solution according to any one of the first aspect or the possible designs of the first aspect.

According to a fifth aspect, an embodiment of this application provides a computer program. The computer program includes instructions, and when the instructions are run on a computer, the computer is enabled to perform the technical solution according to any one of the first aspect or the possible designs of the first aspect.

According to a sixth aspect, an embodiment of this application provides a graphical user interface on an electronic device. The electronic device includes a display, one or more memories, and one or more processors. The one or more processors are configured to execute one or more computer programs stored in the one or more memories. The graphical user interface includes a graphical user interface displayed when the electronic device performs the technical solution according to any one of the first aspect or the possible designs of the first aspect.

For beneficial effects of the second aspect to the sixth aspect, refer to the beneficial effects of the first aspect. Details are not described again.

### BRIEF DESCRIPTION OF DRAWINGS

FIG. 1 is a schematic diagram of a structure of an electronic device according to an embodiment of this application;
FIG. 2 is a block diagram of a software structure of an electronic device according to an embodiment of this application;
FIG. 3 shows a group of GUIs according to an embodiment of this application;
FIG. 4 shows another group of GUIs according to an embodiment of this application;
FIG. 5(a) and FIG. 5(b) show another group of GUIs according to an embodiment of this application;
FIG. 6(a) to FIG. 6(g) show another group of GUIs according to an embodiment of this application;
FIG. 7(a) and FIG. 7(b) show another group of GUIs according to an embodiment of this application;
FIG. 8 shows another group of GUIs according to an embodiment of this application;
FIG. 9(a) to FIG. 9(h) show another group of GUIs according to an embodiment of this application;
FIG. 10 shows another group of GUIs according to an embodiment of this application;
FIG. 11(a) to FIG. 11(c) show another group of GUIs according to an embodiment of this application;
FIG. 12(a) to FIG. 12(d) show another group of GUIs according to an embodiment of this application;
FIG. 13(a) to FIG. 13(e) show another group of GUIs according to an embodiment of this application;
FIG. 14(a) to FIG. 14(d) show another group of GUIs according to an embodiment of this application;
FIG. 15(a) to FIG. 15(d) show another group of GUIs according to an embodiment of this application;
FIG. 16(a) to FIG. 16(c) show another group of GUIs according to an embodiment of this application;
FIG. 17(a) to FIG. 17(c) show another group of GUIs according to an embodiment of this application;
FIG. 18(a) to FIG. 18(d) show another group of GUIs according to an embodiment of this application;
FIG. 19(a) to FIG. 19(c) show another group of GUIs according to an embodiment of this application;
FIG. 20 shows another group of GUIs according to an embodiment of this application; and
FIG. 21 is a flowchart of an example of a service card processing method according to an embodiment of this application.

### DESCRIPTION OF EMBODIMENTS

Terms used in the following embodiments are merely intended to describe specific embodiments, but are not intended to limit this application. As used in this specification and appended claims of the application, singular expressions "one", "a", "the", "the foregoing", "this", and "the one" are also intended to include expressions such as "one or more", unless the contrary is clearly indicated in the context. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B each may be singular or plural. The character "/" usually indicates an "or" relationship between the associated objects.

Reference to "an embodiment", "some embodiments", or the like described in this specification indicates that one or more embodiments of this application include a specific feature, structure, or characteristic described with reference to the embodiments. Therefore, statements "in an embodiment", "in some embodiments", "in some other embodiments", and the like appeared in different places in this specification do not necessarily refer to a same embodiment, but mean "one or more but not all embodiments" unless otherwise specifically emphasized in another manner. The terms "include", "have", and their variants all mean "include but are not limited to", unless otherwise specifically emphasized in another manner.

The following describes an electronic device, a user interface used for the electronic device, and embodiments used for using the electronic device. In some embodiments, the electronic device may be a portable electronic device that further includes other functions such as a personal digital assistant function and/or a music player function, for example, a mobile phone, a tablet computer, or a wearable electronic device (for example, a smartwatch) having a wireless communication function. An example embodiment of a portable electronic device includes but is not limited to a portable electronic device using iOS^{®}, Android^{®}, Microsoft^{®}, or another operating system. The portable electronic device may alternatively be another portable electronic device, such as a laptop (Laptop) computer. It should be further understood that, in some other embodiments, the foregoing electronic device may not be the portable electronic device but a desktop computer.

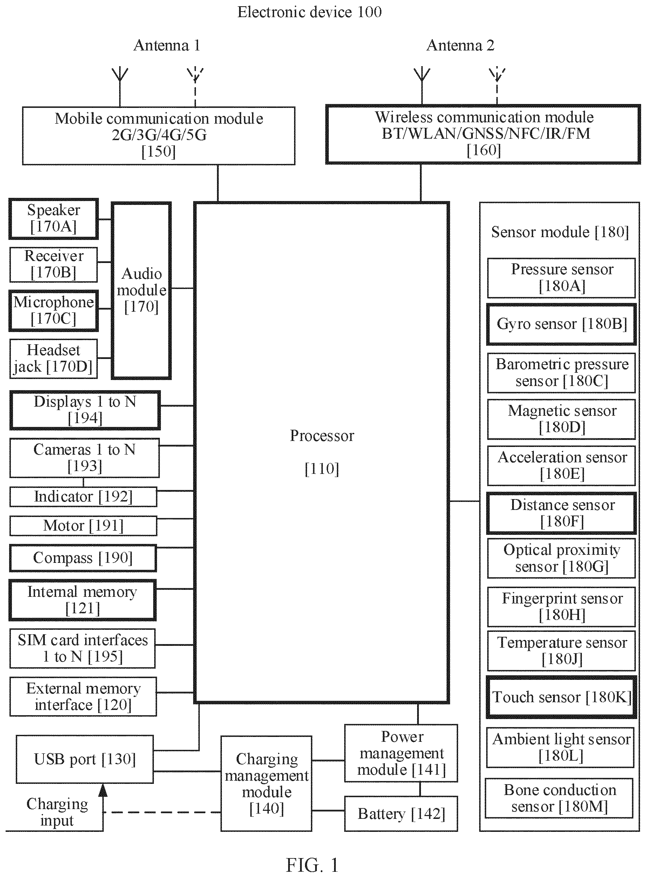

For example, FIG. 1 is a schematic diagram of a structure of an electronic device 100. The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a compass 190, a motor 191, an indicator 192, a camera 193, a display 194, a subscriber identification module (subscriber identification module, SIM) card interface 195, and the like.

It may be understood that the structure shown in this embodiment of this application does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors. In some embodiments, the electronic device 101 may alternatively include one or more processors 110. The controller may generate an operation control signal based on instruction operation code and a time sequence signal, to complete control of instruction reading and instruction execution. In some other embodiments, a memory may be further disposed in the processor 110, to store instructions and data. For example, the memory in the processor 110 may be a cache. The memory may store instructions or data that is just used or is cyclically used by the processor 110. If the processor 110 needs to use the instructions or the data again, the processor may directly invoke the instructions or the data from the memory. This avoids repeated access and reduces waiting time of the processor 110, thereby improving data processing or instruction execution efficiency of the electronic device 101.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB port, and/or the like. The USB port 130 is a port that conforms to a USB standard specification, and may be specifically a mini USB port, a micro USB port, a USB Type-C port, or the like. The USB port 130 may be configured to connect to a charger to charge the electronic device 101, or may be configured to transmit data between the electronic device 101 and a peripheral device. The USB port 130 may alternatively be configured to connect to a headset to play audio through the headset.

It may be understood that an interface connection relationship between the modules illustrated in this embodiment of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB port 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor a parameter such as a battery capacity, a battery cycle count, or a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to: transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules of the processor 110.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini LED, a micro LED, a micro OLED, quantum dot light emitting diodes (quantum dot light emitting diodes, QLED), or the like. In some embodiments, the electronic device 100 may include one or more displays 194.

In some embodiments of this application, when the display panel is made of a material such as an OLED, an AMOLED, or an FLED, the display 194 in FIG. 1 may be bent. Herein, that the display 194 may be bent means that any part of the display may be bent at any angle and may be kept at the angle. For example, the display 194 may be bent left and right in the middle, or may be bent up and down in the middle.

The display 194 of the electronic device 100 may be a flexible display. Currently, the flexible display attracts much attention because of unique features and huge potential of the flexible display. Compared with a conventional display, the flexible display has features of strong flexibility and bendability, and can provide the user with a new bendability-based interaction mode, to meet more requirements of the user for the electronic device. For an electronic device provided with a collapsible display, the collapsible display on the electronic device can switch between a small screen in a folded form and a large screen in an unfolded form at any time. Therefore, the user uses a split-screen function more frequently on the electronic device provided with the foldable display.

The electronic device 100 can implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or more cameras 193.

The digital signal processor is configured to process a digital signal, and may process another digital signal in addition to the digital image signal. For example, when the electronic device 100 selects a frequency, the digital signal processor is configured to perform Fourier transform on frequency energy.

The video codec is configured to: compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, MPEG-4, and the like.

The NPU is a neural-network (neural-network, NN) computing processor. The NPU quickly processes input information based on a structure of a biological neural network, for example, based on a transfer mode between human brain neurons; and may further continuously perform self-learning. The NPU may be used to implement applications such as intelligent cognition of the electronic device 100, for example, image recognition, facial recognition, voice recognition, and text understanding.

The external memory interface 120 may be used to connect to an external storage card, for example, a micro SD card, to extend a storage capability of the electronic device 100. The external storage card communicates with the processor 110 through the external memory interface 120, to implement a data storage function. For example, files such as music and videos are stored in the external storage card.

The internal memory 121 may be configured to store one or more computer programs, and the one or more computer programs include instructions. The processor 110 may run the instructions stored in the internal memory 121, so that the electronic device 101 performs the method provided in some embodiments of this application, various applications, data processing, and the like. The internal memory 121 may include a program storage area and a data storage area. The program storage area may store an operating system. The program storage area may further store one or more applications (for example, Gallery and Contacts), and the like. The data storage area may store data (for example, a photo and a contact) created during use of the electronic device 101, and the like. In addition, the internal memory 121 may include a high-speed random access memory, or may include a nonvolatile memory, for example, one or more magnetic disk storage devices, a flash memory device, or a universal flash storage (universal flash storage, UFS). In some embodiments, the processor 110 may run the instructions stored in the internal memory 121 and/or the instructions stored in the memory disposed in the processor 110, so that the electronic device 101 performs the method provided in embodiments of this application, another application, and data processing. The electronic device 100 may implement an audio function, for example, music playing or recording, by using the audio module 170, the speaker 170A, the receiver 170B, the microphone 170C, the headset jack 170D, the application processor, and the like.

The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed on a same touch location but have different touch operation intensity may correspond to different operation instructions. For example, when a touch operation whose touch operation intensity is less than a first pressure threshold is performed on a Messages application icon, an instruction for viewing an SMS message is performed. When a touch operation whose touch operation intensity is greater than or equal to the first pressure threshold is performed on the Messages application icon, an instruction for creating a new SMS message is performed.

The gyro sensor 180B may be configured to determine a moving posture of the electronic device 100. In some embodiments, an angular velocity of the electronic device 100 around three axes (that is, axes X, Y, and Z) may be determined by using the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may also be used in a navigation scenario and a somatic game scenario.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor near the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is less than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 constitute a touchscreen. The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may also be disposed on a surface of the electronic device 100 at a location different from that of the display 194.

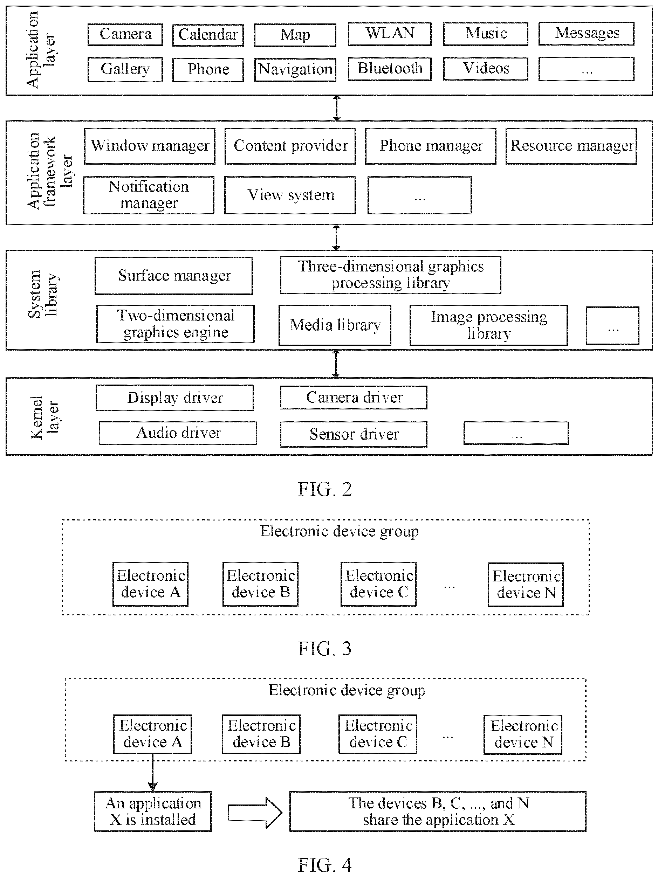

FIG. 2 is a block diagram of a software structure of an electronic device 100 according to an embodiment of this application. In a layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Phone, Map, Navigation, WLAN, Bluetooth, Music, Videos, and Messages.

The application framework layer provides an application programming interface (application programming interface, API) and a programming framework for an application at the application layer, and the application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, and determine whether there is a status bar, a lock screen, a screen capture, or the like.

The content provider is configured to: store and obtain data, and enable the data to be accessed by an application. The data may include a video, an image, audio, calls that are made and received, a browsing history, a bookmark, an address book, and the like.

The view system includes visual controls such as a control for displaying a text and a control for displaying a picture. The view system may be configured to construct an application. A display interface may include one or more views. For example, a display interface including an SMS message notification icon may include a text display view and a picture display view.

The phone manager is configured to provide a communication function for the electronic device 100, for example, management of a call status (including answering, declining, or the like).

The resource manager provides various resources for the application, for example, a localized string, an icon, a picture, a layout file, and a video file.

The notification manager enables the application to display notification information in the status bar, and may be configured to convey a notification-type message. The displayed notification information may automatically disappear after a short pause without requiring user interaction. For example, the notification manager is configured to: notify download completion, give a message notification, and the like. The notification manager may alternatively be a notification that appears in a top status bar of the system in a form of a graph or a scroll bar text, for example, a notification of an application that is run on the background, or may be a notification that appears on the screen in a form of a dialog window. For example, text information is prompted in the status bar, a prompt tone is produced, the electronic device vibrates, or an indicator blinks.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to: manage a display subsystem and provide fusion of 2D and 3D layers for a plurality of applications.

The media library supports playback and recording of a plurality of commonly used audio and video formats, a static image file, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

Before embodiments of this application are described, several concepts related to embodiments of this application are first described.

Electronic device group: A plurality of electronic devices are associated with each other, and may form the electronic device group. For example, as shown in FIG. 3, if an electronic device A to an electronic device N log in to a same account, the electronic device A to the electronic device N may form an electronic device group. As shown in FIG. 4, an application X is installed on any electronic device in an electronic device group, and another electronic device in the electronic device group may share the application. In addition, electronic devices in the electronic device group may further share personalized information, application information, and the like.

Feature ability (Feature Ability, FA): A function that can be executed is referred to as an FA. "Huawei Music" is used as an example. "Huawei Music" includes functions that can be executed, such as music playing and downloading, and each function may be referred to as an FA.

Currently, a user has increasingly more types of electronic devices, and the user needs to spend a lot of time in managing applications and home screens of different electronic devices. For example, when using a same application on a plurality of electronic devices, the user needs to download the application on each electronic device. Specifically, for example, after the user logs in to a Huawei account A on a mobile phone to purchase and install an application B in AppGallery, if the user needs to use the application B on a tablet computer, the user needs to log in to the account A on the tablet computer again to download and install the application B. For another example, the user needs to operate each electronic device to perform personalized setting. Specifically, after the user moves icons of an application A and an application B to a same folder on a mobile phone, if the user needs to display the icons of the application A and the application B in the same folder on a tablet computer, the user further needs to move the icons of the application A and the application B to the same folder on the tablet computer. Based on this, an embodiment of this application provides a home screen sharing method.

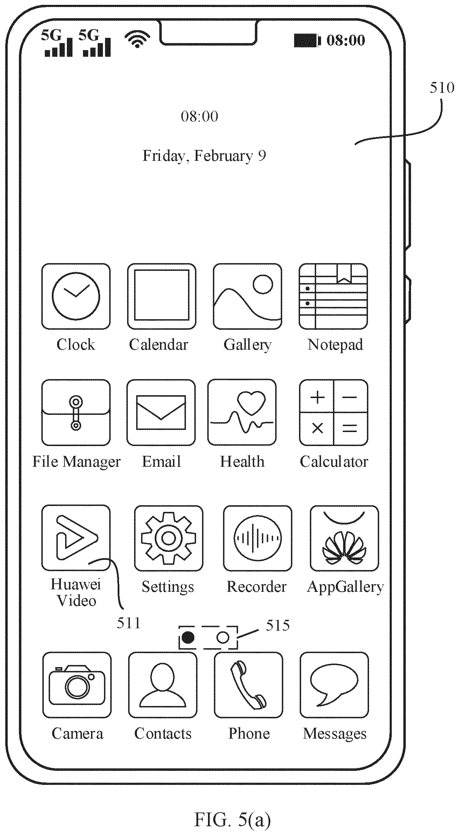

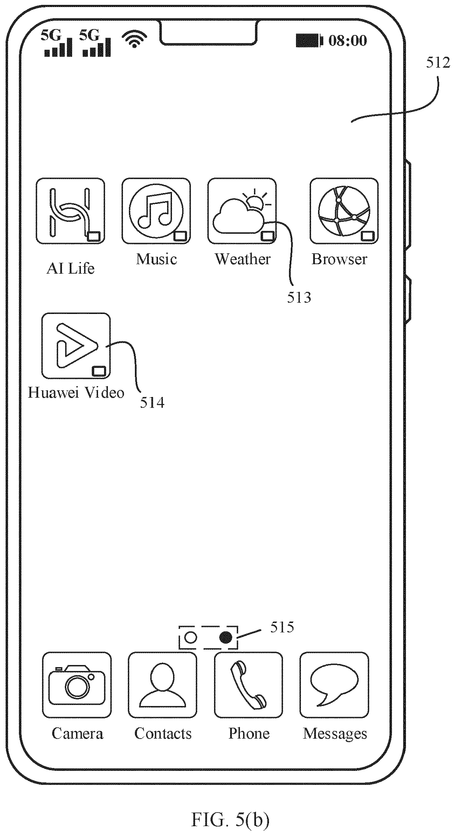

FIG. 5(a) and FIG. 5(b) show a group of graphical user interfaces (graphical user interface, GUI) according to an embodiment of this application.

As shown in FIG. 5(a) and FIG. 5(b), a first electronic device (mobile phone) displays a home screen, and an interface 510 and an interface 512 are different interfaces of the home screen.

The interface 510 is configured to display application icons (for example, a Clock application icon, a Calendar application icon, a Gallery application icon, and a Music application icon 511) of one or more applications installed on the first electronic device. For ease of description, the "application installed on the first electronic device" is also referred to as a "local application" below.

The interface 512 is configured to display application icons of one or more applications installed on another electronic device. For example, if a user installs an application Music on a second electronic device (for example, a tablet computer), the home screen (for example, the interface 512) of the first electronic device (for example, the mobile phone) displays an icon (for example, an icon 514) used to open a Music application of a tablet computer version. It should be noted that, the one or more applications may be applications that are not installed on the first electronic device and that are installed only on another electronic device, or may be applications that are installed on both the first electronic device and another device. For ease of description, the "application installed on the device other than the first electronic device" is also referred to as a "shared application" below.

For example, the application Music is installed on both the mobile phone and the tablet computer. In this case, as shown in FIG. 5(a) and FIG. 5(b), an icon 511 is displayed in the interface 510 of the mobile phone, and the icon 514 is displayed in the interface 512 of the mobile phone. The icon 511 is used to open a Music application of a mobile phone version, and the icon 514 is used to open the Music application of the tablet computer version.

Optionally, the first electronic device may display an icon of the local application and an icon of the shared application in a differentiation manner. For example, the first electronic device may display the icon of the shared application through highlight display, grayscale display, or shadow display. For another example, a thumbnail may be displayed in a lower right comer of the icon to identify an electronic device from which an application comes. For example, as shown in FIG. 5(b), the Music application of the tablet computer version is opened by tapping the icon 514. Therefore, a thumbnail of the tablet computer is displayed in a lower right corner of the icon 514. If the Music application of the mobile phone version is opened by tapping the application icon 511, as shown in the icon 511, a thumbnail is not displayed to identify an electronic device from which the application comes.

It should be understood that descriptions are provided in the foregoing embodiment by using an example in which the icon of the shared application is displayed in a last interface of the home screen. However, this is not limited in this embodiment of this application. The electronic device may use any one or more interfaces of the home screen to display the icon of the shared application.

In this embodiment of this application, a plurality of electronic devices may share an application. After an application A is installed on one electronic device, an icon of the application A may be displayed on another electronic device. Therefore, the user can use the application A on the another electronic device without downloading and installing the application A on the another electronic device through AppGallery, to save time of the user.

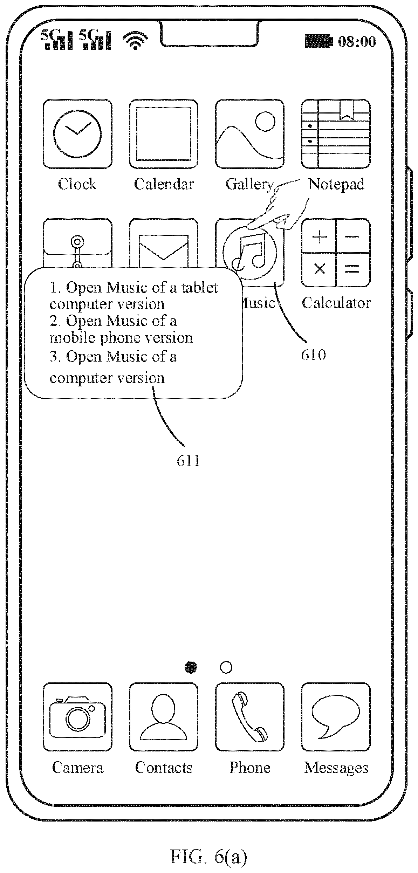

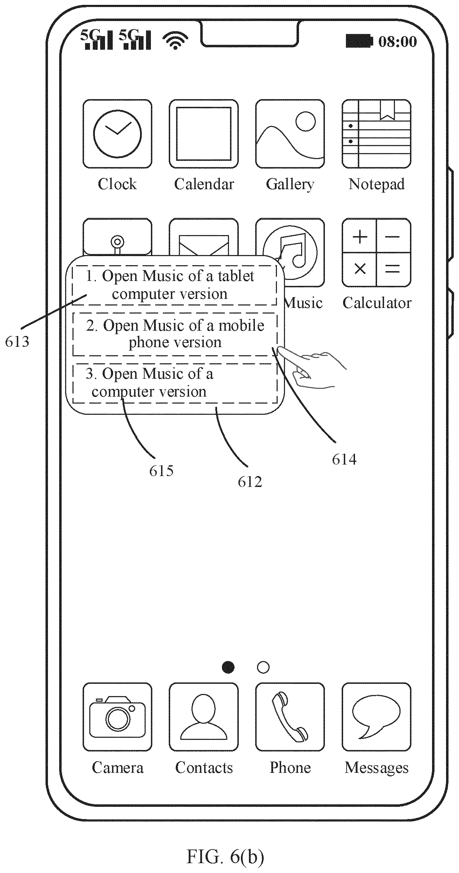

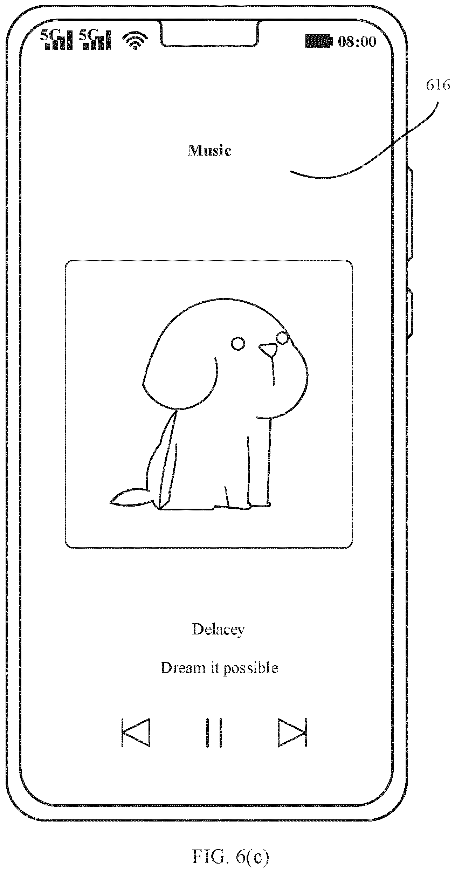

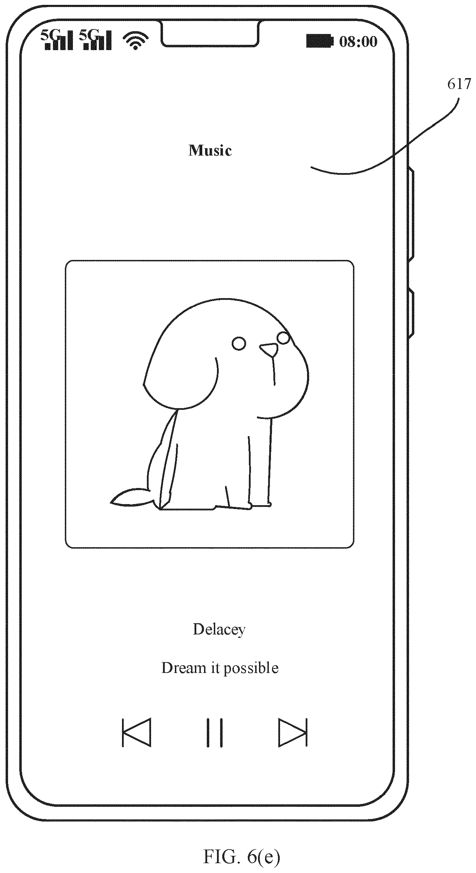

Optionally, to facilitate a user operation and effectively use home screen space, a plurality of application icons used to open a same application may be displayed in an integrated manner. For example, if a total of three versions, that is, a tablet computer version, a mobile phone version, and a computer version, of music applications are respectively installed on a tablet computer, a mobile phone, and a computer, icons used to open music applications of different versions may be displayed in an integrated manner. As shown in FIG. 6(a), the mobile phone may display only one Music application icon 610.

Optionally, when a plurality of application icons of a same application are displayed in an integrated manner, a version of a to-be-opened application may be determined based on user selection. As shown in FIG. 5(a) to FIG. 5(e), the mobile phone displays a list 611 in response to touching and holding the Music application icon 610 by the user, where the list 611 includes an option 614 used to open a Music application of a mobile phone version, an option 613 used to open a Music application of a tablet computer version, and an option 615 used to open a Music application of a computer version. If the mobile phone detects that the user taps the option 614, the mobile phone opens the Music application of the mobile phone version, and may display an interface 616. If the mobile phone detects that the user taps the option 613, the mobile phone opens the Music application of the tablet computer version, and may display an interface 617. In this way, the user can select the version of the to-be-opened application.

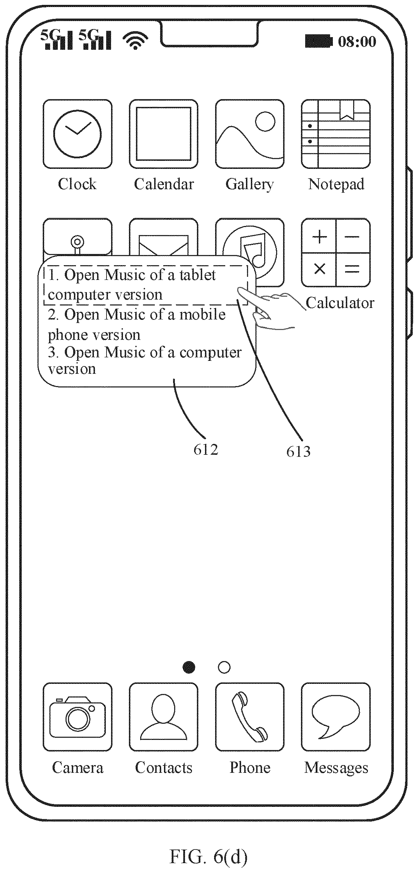

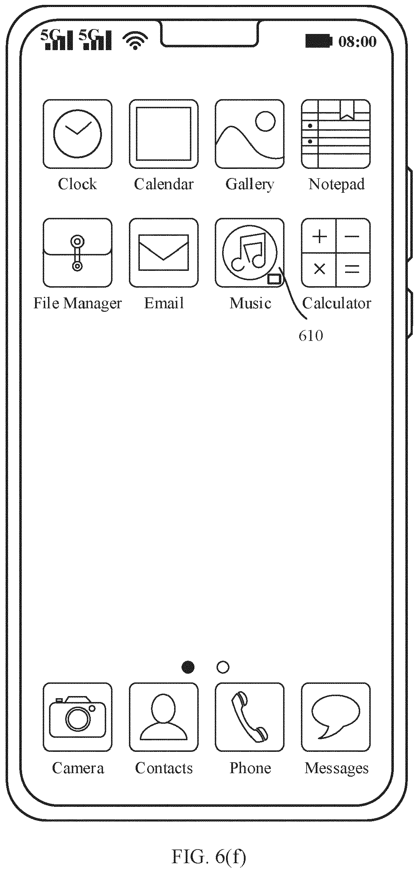

Optionally, the version of the to-be-opened application may also be determined based on a use habit of the user. For example, the version of the to-be-opened application may be determined based on a use frequency of each version. If a frequency of using the Music application of the mobile phone version by the user on the mobile phone is higher than a frequency of using the Music application of the computer version, the mobile phone opens the Music application of the mobile phone version in response to detecting that the user taps the Music application icon 610. For another example, the version of the to-be-opened application may be determined based on a use time of each version. If the user last uses the Music application on the tablet computer, the mobile phone opens the Music application of the tablet computer version in response to detecting that the user taps the Music application icon 610. For another example, the version of the to-be-opened application may also be determined based on a version of an application last used by the user on the mobile phone. As shown in FIG. 6(d) to FIG. 6(f), in response to detecting that the user taps the option 613, the mobile phone opens the Music application of the tablet computer version, and then detects that the user taps the Music application icon 610. In this case, the mobile phone opens the last used version of application, that is, the Music application of the tablet computer version. Optionally, to help the user learn of the version of the application to be opened after the user taps the icon, a thumbnail may be displayed to identify an electronic device from which the application comes. As shown in FIG. 6(f), a thumbnail of the tablet computer may be displayed in a lower right corner of the Music application. For detailed content, refer to the foregoing related records. Details are not described again.

Optionally, the version of the to-be-opened application may also be determined according to a preset rule. Assuming that the preset rule is that a priority of the Music application of the tablet computer version is higher than a priority of the Music application of the computer version and a priority of the Music application of the mobile phone version, the mobile phone opens the Music application of the mobile phone version in response to detecting that the user taps the Music application icon 610. The foregoing priority may be preset by a user or a system. This is not limited in this application.

An interface of the shared application is displayed on the first electronic device in various methods. For example, the first electronic device may establish a connection to the second electronic device, receive interface information of the shared application that is sent by the second electronic device, and display the interface of the shared application based on the received interface information. For ease of description, this is referred to as "projection" below.

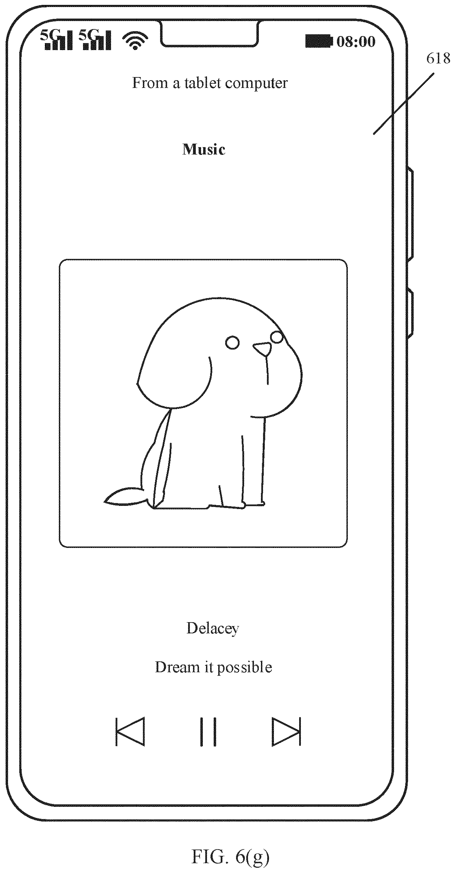

Optionally, when a distance between the first electronic device and the second electronic device is less than a first threshold, the first electronic device displays the interface of the shared application through projection. For example, the mobile phone is connected to the tablet computer, and the mobile phone receives interface information of the Music application that is sent by the tablet computer, and displays an interface 618 of the Music application on the mobile phone based on the interface information of the Music application. Optionally, when displaying the interface of the shared application through projection, the first electronic device may display a source of the application. For example, as shown in FIG. 6(g), "From a tablet computer" may be displayed in the interface 618. When the distance between the first electronic device and the second electronic device is greater than the first threshold, and the first electronic device cannot display the interface of the shared application through projection, the first electronic device may obtain corresponding program instructions, and display a corresponding application interface by running the program instructions on the first electronic device. For details, refer to the following description.

It should be understood that the user may choose, based on a requirement, whether to display the interface of the shared application through projection. When the user presets that the interface of the shared application is not displayed through projection, even if the distance between the electronic devices is less than the first threshold, the shared application is not displayed through projection.

It should be noted that, optionally, when the shared application is opened, information about a same application may be synchronized between the electronic devices.

For example, the information about the same application may be an application account and/or application data. For example, an electronic device group includes a tablet computer and a mobile phone. A Music application is installed on the tablet computer and an account is logged in to. When the user opens the application on the mobile phone (which may be opened through projection, or may be opened after installation), the user may automatically log in to the account, and may further synchronize an interface of the Music application on the tablet computer.

It can be learned from the descriptions in this embodiment of this application that when the shared application is opened, a plurality of different opening manners may be used based on the distance between the electronic devices, use behavior of the user, and the like. The information about the same application may be further synchronized between the electronic devices.

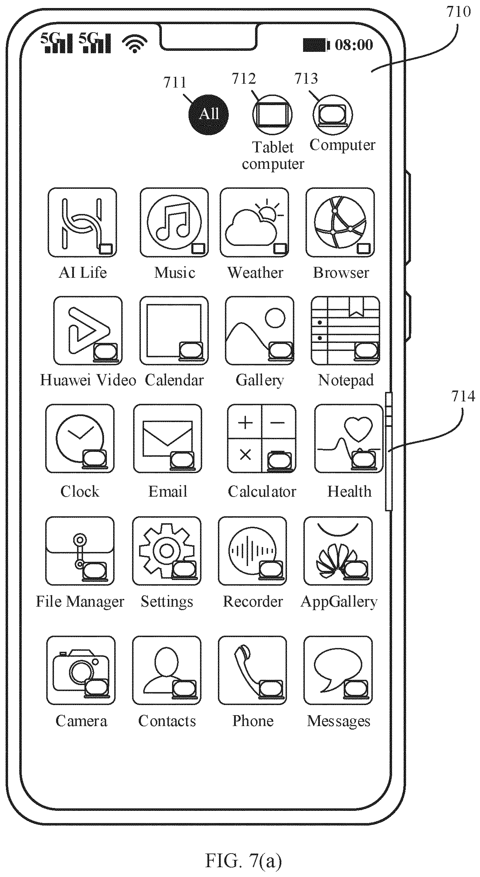

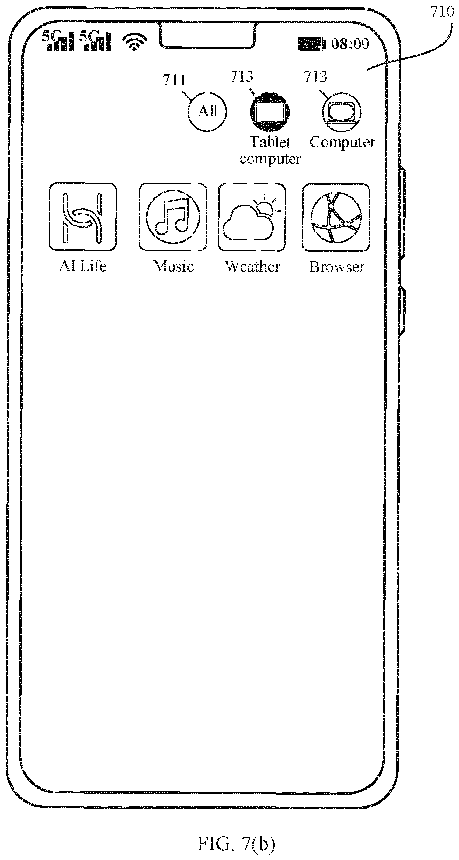

To help the user search for a shared application based on a device source, FIG. 7(a) and FIG. 7(b) show another group of GUIs according to an embodiment of this application.

As shown in FIG. 7(a), the first electronic device may display an interface 710, where the interface may include electronic device labels (for example, a label 711, a label 712, and a label 713). When a label of an electronic device is selected, the first electronic device may display an icon of an application installed on the device. For example, as shown in FIG. 7(a), the mobile phone may display icons of all shared applications in response to detecting an operation of tapping the label 711 by the user. When there are a large quantity of icons of shared applications, the interface 710 may further display a scroll bar 714. In response to detecting an operation of tapping the label 712 by the user, the mobile phone may display an icon of an application installed on the tablet computer. In response to detecting an operation of tapping the label 713 by the user, the mobile phone may display an icon of an application installed on the computer.

It may be understood that in this case, the first electronic device may not display a thumbnail identifying an electronic device from which an application comes. As shown in FIG. 7(b), an application icon displayed by the mobile phone in the interface 710 may not display a thumbnail of the tablet computer.

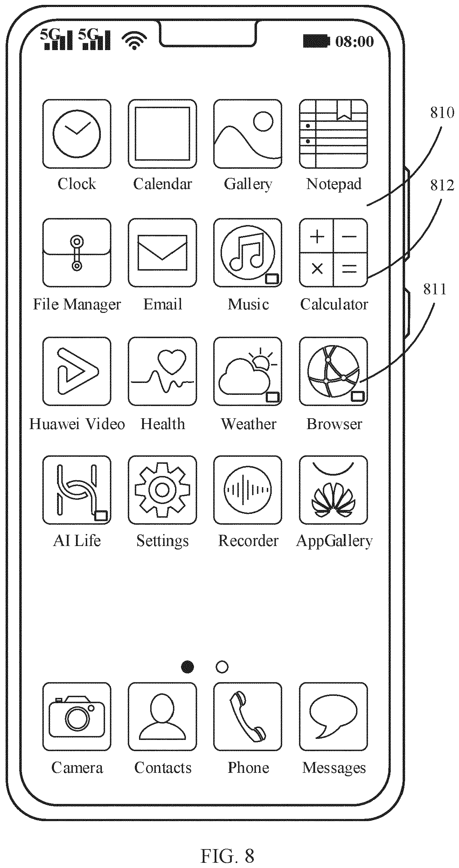

It should be understood that descriptions are provided in the foregoing embodiment by using an example in which the shared application and the local application are separately displayed on different pages of the home screen. However, this is not limited in this embodiment of this application. The first electronic device may display icons of the shared application and the local application in a same interface of the home screen. As shown in FIG. 8, applications such as Settings, Health, and Calculator are installed on the mobile phone, and applications such as Browser and Music are installed on the tablet computer. In this case, an interface 810 may display an icon 812 used to open the Calculator application installed on the mobile phone, and an icon 811 used to open the Browser application installed on the tablet computer.

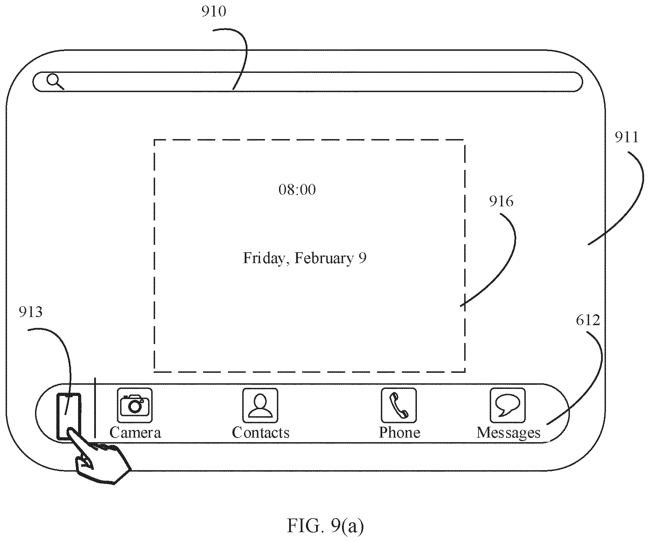

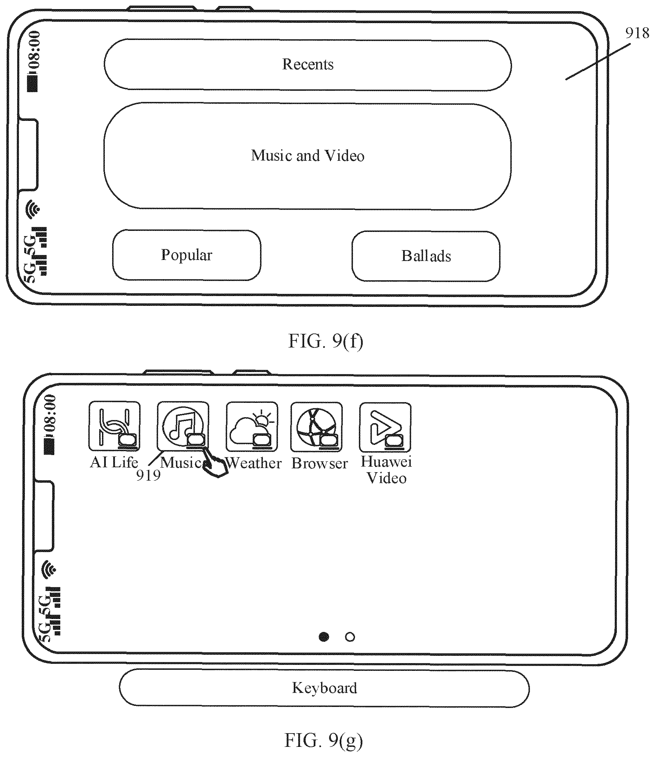

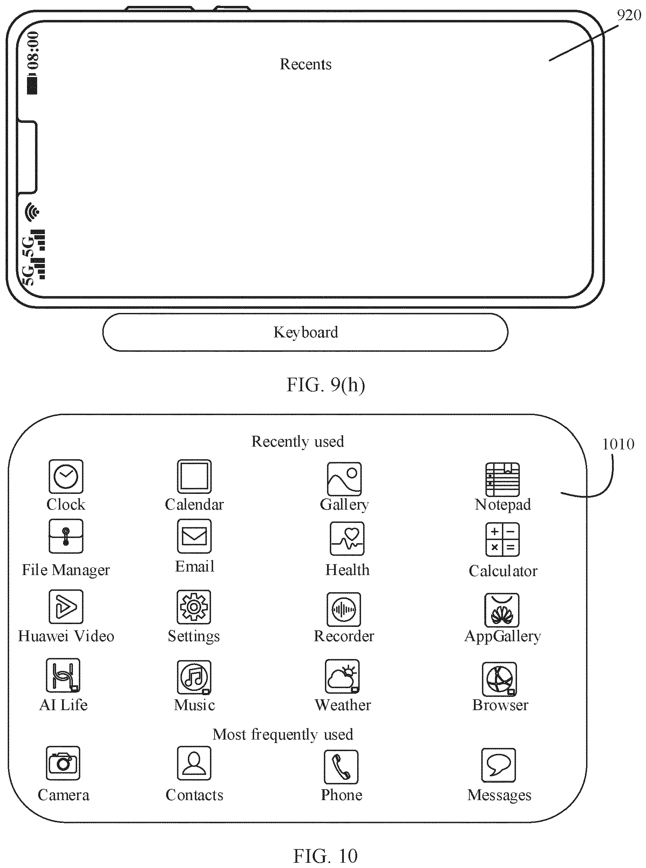

Optionally, the first electronic device may be connected to a display. As shown in FIG. 9(a), the mobile phone is connected to the display, and an interface 911 is displayed on the display. The interface 911 may include a search bar 910 and a taskbar (a Dock bar) 912. The Dock bar 912 may display a device identifier (identifier 913) of an electronic device (such as the mobile phone) connected to the display and icons (such as a Camera icon, a Contacts icon, a Phone icon, and a Messages icon) of commonly used applications on the electronic device. The interface may further include a commonly used widget (for example, time information 916) of the electronic device connected to the display.

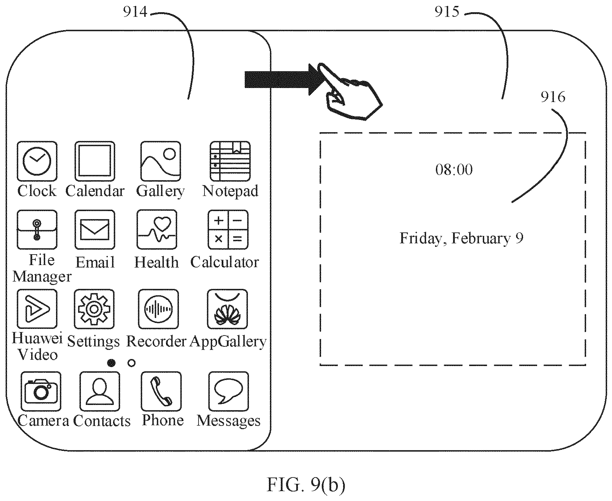

As shown in FIG. 9(a) and FIG. 9(b), the display displays a home screen of the mobile phone in response to detecting a first operation of the user. For example, the first operation may be that the user taps the device identifier, or the user slides in a blank area of the display.

For example, if the home screen of the mobile phone includes a plurality of pages (for example, a first page and a second page), an interface 914 and an interface 915 may be displayed on the display in response to the first operation of the user. The interface 914 includes icons displayed on the first page of the home screen of the mobile phone. The interface 914 may be configured to display content included in the interface 911, for example, the time information 916.

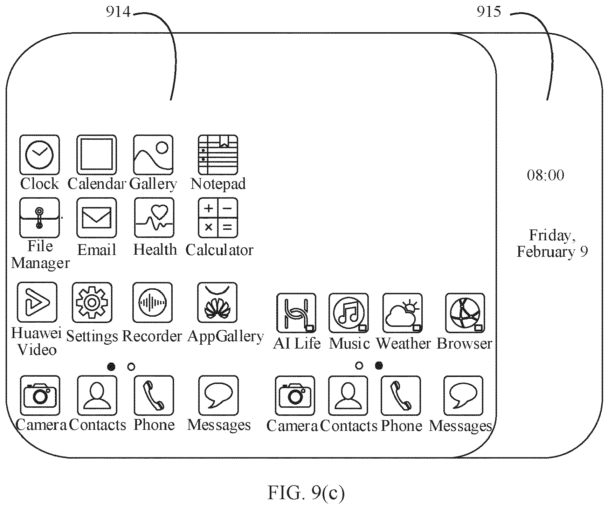

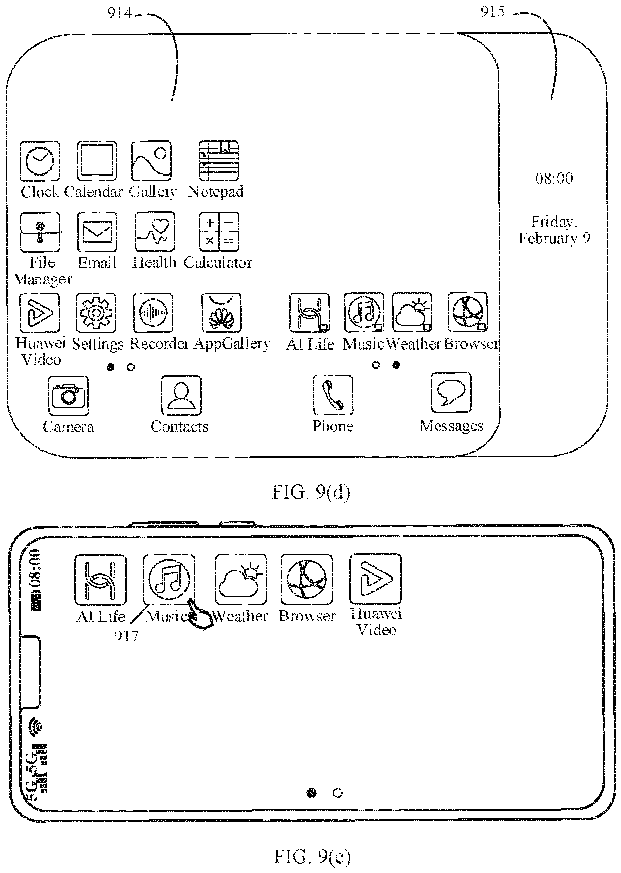

Optionally, a display area of the home screen of the mobile phone may be added based on a user operation. As shown in FIG. 9(b) and FIG. 9(c), the display area of the home screen of the mobile phone is added in response to detecting a second operation of the user. In this case, the display may simultaneously display a plurality of pages of the home screen of the mobile phone in the interface 914. Optionally, when the display simultaneously displays the plurality of pages of the home screen of the mobile phone in the interface 914, to avoid repeatedly displaying the Dock bar, as shown in FIG. 9(d), a plurality of Dock bars displayed on different pages may be integrated into one Dock bar for display.

Optionally, content displayed on the display may be determined based on a historical connection status. For example, if it is detected that the mobile phone is connected to the display for the first time, a first connection interface, for example, the interface 911, is displayed. If it is detected that the mobile phone is connected to the display for a non-first time, an interface different from the interface obtained during the first connection is displayed. As shown in FIG. 10, the mobile phone displays an interface 1010 on the display.

For example, the interface 1010 may display an icon of an application most frequently used by the user and/or an icon of an application last used by the user. Optionally, the icon of the application that is most frequently used and the icon of the application recently used by the user may be displayed in different areas. For example, the first electronic device displays a Camera application icon, a Contacts application icon, a Phone application icon, and a Messages application icon in a lower display area of the interface 1010, and displays a Clock application icon, a Calendar application icon, a Gallery application icon, and the like in an upper display area of the interface 1010.

It should be understood that, the icons of the applications displayed in each of the interface 914 and the interface 1010 may be icons of applications installed on the mobile phone, and may also be icons of applications installed on another device connected to the mobile phone.

In the embodiments shown in FIG. 9(a) to FIG. 9(d) and FIG. 10, after the first electronic device is connected to the display, an original home screen layout is changed to adapt to display space of the display.

Optionally, the first electronic device may be further connected to an external device. If a function of the first electronic device is similar to a function of another electronic device after the first electronic device is connected to the external device, the first electronic device may preferentially use an application of a version of the another electronic device. For example, as shown in FIG. 9(e) to FIG. 9(h), after the mobile phone is connected to a keyboard, a function of the mobile phone is similar to a function of a computer. Therefore, when the mobile phone is connected to the keyboard, the mobile phone may preferentially open an application of a computer version. When the mobile phone is not connected to the keyboard, in response to detecting an operation of tapping a Music application icon 917 by the user, the mobile phone may display an interface 918 of the Music application of the mobile phone version. In response to detecting that the mobile phone is connected to the keyboard, the mobile phone may switch the icon 917 to an icon 919, where a thumbnail of the tablet computer may be displayed on the icon 919. In response to detecting an operation of tapping the icon 919 by the user, the mobile phone may display an interface 920 of the Music application of the computer version.

As described in this embodiment of this application, when a function of the first electronic device is similar to a function of another electronic device after the first electronic device is connected to an external device, an application of a version of the another electronic device may be preferentially displayed on the first electronic device, to increase a degree of matching between the electronic devices and improve user experience.

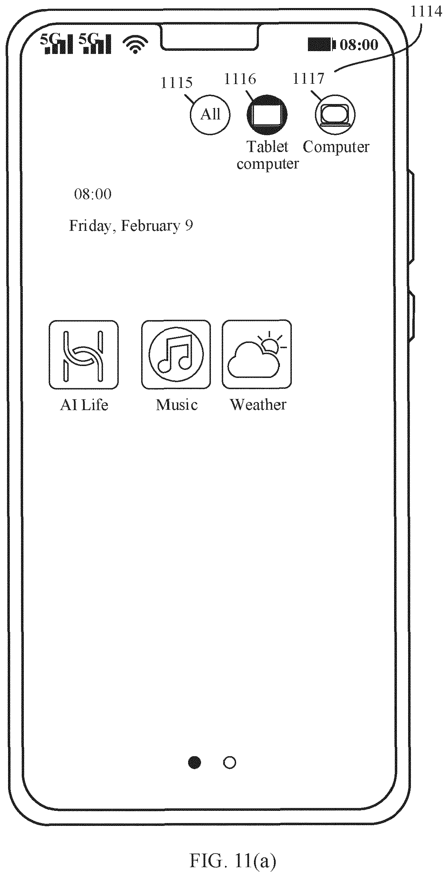

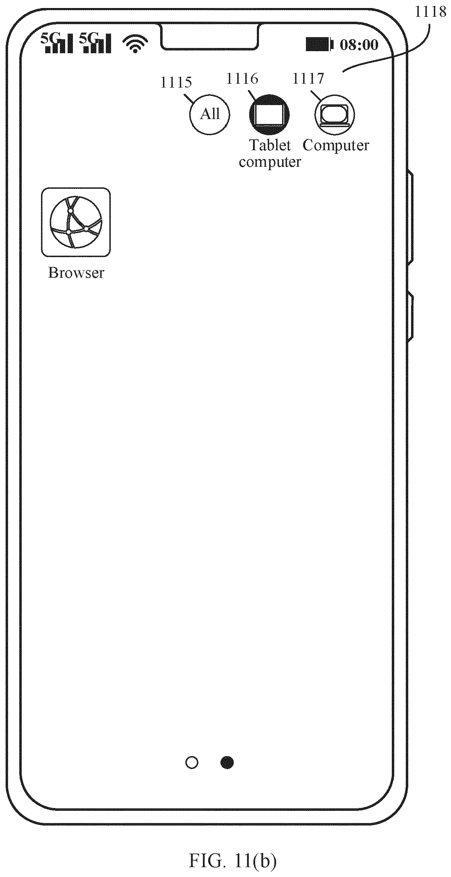

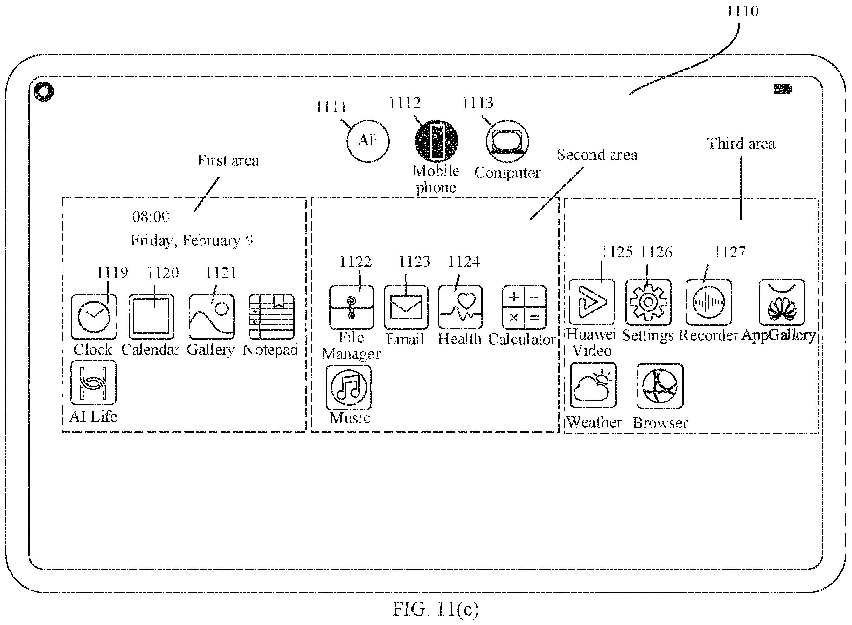

Optionally, the first electronic device may display, based on a home screen layout of the second electronic device, an icon of a shared application installed on the second electronic device. For example, as shown in FIG. 11(a) and FIG. 11(b), an electronic device group includes a tablet computer and a mobile phone. A first page of a home screen of the tablet computer displays AI Life, Music, and Weather application icons, and a second page of the home screen of the tablet computer displays a Browser application icon. The mobile phone may display the AI Life, Music, and Weather application icons in an interface 1114. In response to an operation of switching to an interface 1118 by the user, the mobile phone displays the Browser application icon in the interface 1118. In the foregoing embodiment, an example in which the first electronic device is the mobile phone is used for description. It may be understood that the first electronic device is not limited thereto. For example, the first electronic device may be a tablet computer, a computer, or a television. Alternatively, when a display of the first electronic device is large and a display of the second electronic device is small, the first electronic device may display icons of shared applications in different areas of a same interface based on a home screen layout of the second electronic device. For example, as shown in FIG. 11(c), the electronic device group includes the mobile phone and the tablet computer. A first page of a home screen of the mobile phone displays a Clock application icon, a Calendar application icon, a Gallery application icon, and the like, a second page of the home screen of the mobile phone displays a File Manager application icon, an Email application icon, a Health application icon, and a third page of the home screen of the mobile phone displays a Huawei Video application icon, a Settings application icon, a Recorder application icon, and the like. In this case, when the tablet computer displays icons of shared applications installed on the mobile phone, as shown in an interface 1110, a Clock application icon 1119, a Calendar application icon 1120, and a Gallery application icon 1121 are displayed in a first area, a File Manager application icon 1122, an Email application icon 1123, and a Health application icon 1124 are displayed in a second area, and a Huawei Video application icon 1125, a Settings application icon 1126, and a Recorder application icon 1127 are displayed in a third area.

In this embodiment of this application, the first electronic device displays, based on the home screen layout of the second electronic device, the icons of the shared applications installed on the second electronic device. When the display of the first electronic device is large and the display of the second electronic device is small, the first electronic device may also display the icons of the shared applications in the different areas of the same interface, so that the user can search for an application.

Optionally, classification information of an application may be synchronized between electronic devices that form an electronic device group, and application icons are displayed through classification based on the classification information.

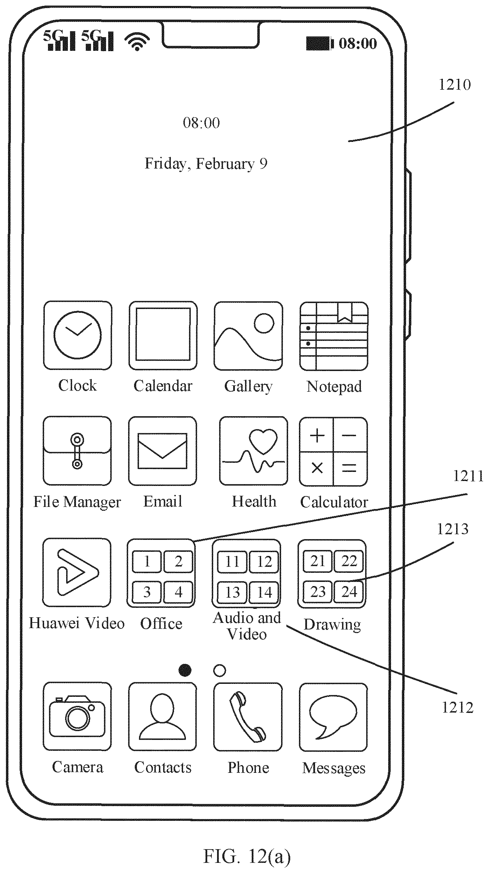

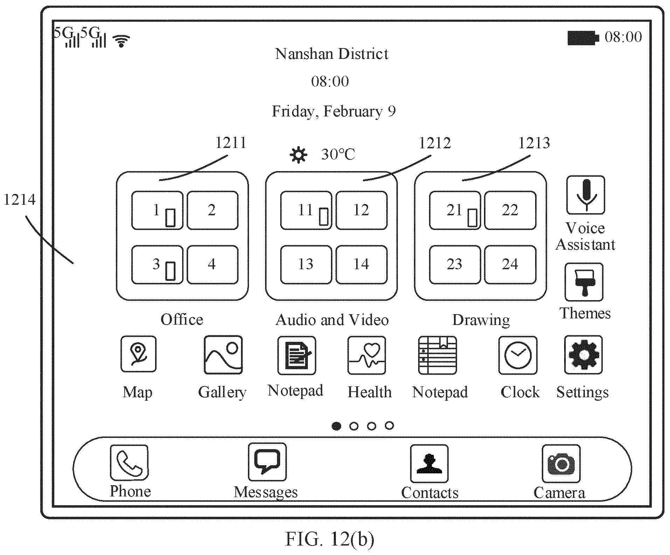

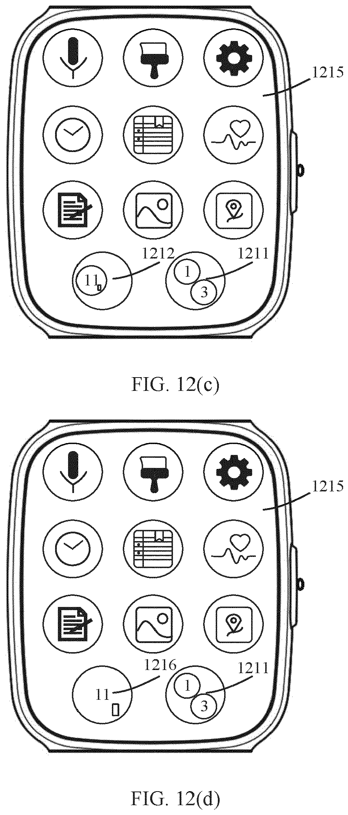

For example, the electronic device group includes a mobile phone, a tablet computer, and a smartwatch. As shown in FIG. 12(a), the user groups applications 1,2, 3, and 4 on the mobile phone into a same folder and names the folder as "Office", groups applications 11, 12, 13, and 14 on the mobile phone into a same folder and names the folder as "Audio and Video", and groups applications 21, 22, 23, and 24 on the mobile phone into a same folder and names the folder as "Drawing". The mobile phone displays an interface 1210. The interface 1210 includes one or more application icons, an office classification folder 1211 (including the applications 1, 2, 3, and 4), an audio and video classification folder 1212 (including the applications 11, 12, 13, and 13), and a drawing classification folder 1213 (including the applications 21, 22, 23, and 24). Application classification information of the mobile phone may be synchronized between the tablet computer and the mobile phone. As shown in FIG. 12(b), the tablet computer displays an interface 1214, where the interface 1214 displays the office folder 1211, the audio and video folder 1212, and the drawing folder 1213. The folder 1211 includes the applications 1, 2, 3, and 4, the folder 1212 includes the applications 11, 12, 13, and 14, and the folder 1213 includes the applications 21, 22, 23, and 24. It should be noted that, even if the application 1 is not installed on the tablet computer, an icon of the application 1 may be displayed in the folder 1211. As shown in FIG. 12(c), if the smartwatch cannot execute the applications 21, 22, 23, and 24 in the drawing folder 1213 and the applications 2, 4, 12, 13, and 14, the smartwatch may display only the office folder 1211 and the audio and video folder 1212 in an interface 1215, and does not display the drawing folder 1213. The office folder 1211 may include only icons of the applications 1 and 3, and does not include icons of the applications 2 and 4. The audio and video folder 1212 may include only an icon of the application 11, and does not include icons of the applications 12, 13, and 14. Optionally, when a folder includes only an icon of one application, the icon of the application may be directly used to display the folder. For example, as shown in FIG. 12(d), the audio and video folder 1212 includes only the icon of the application 11. Therefore, the smartwatch directly displays the icon 1216 of the application 11 in the interface 1215.

Similarly, settings of a Dock bar may be synchronized between electronic devices that form an electronic device group.

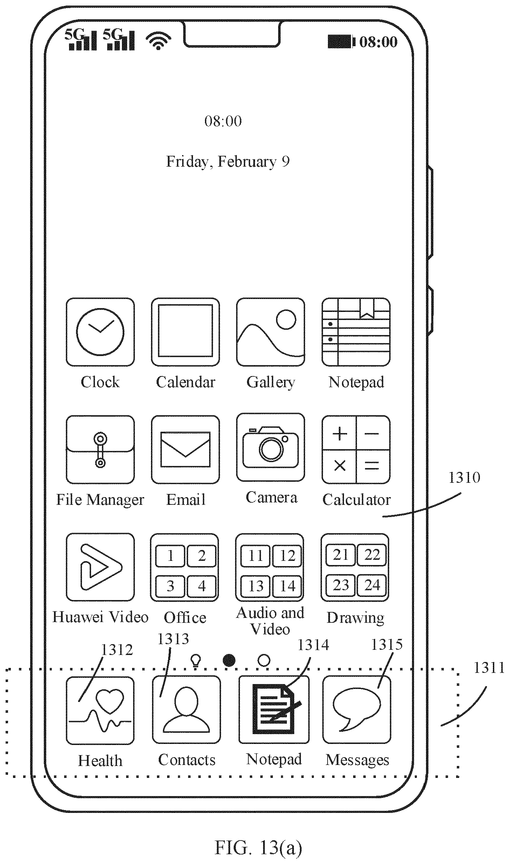

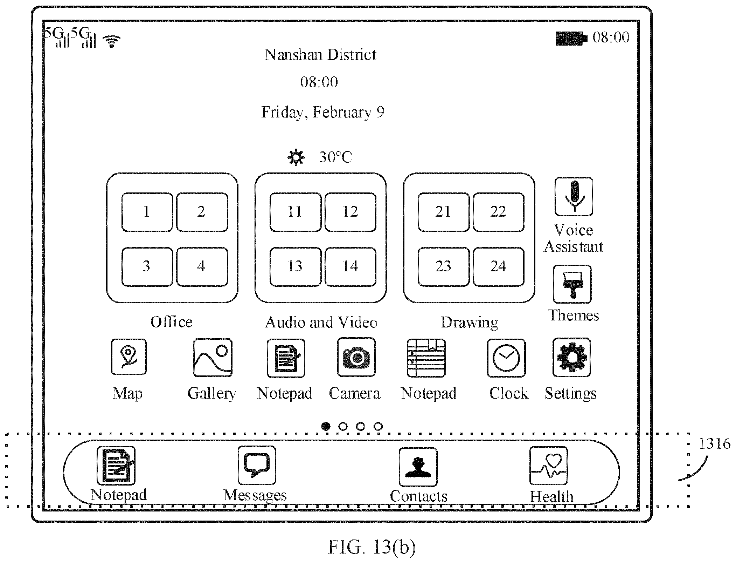

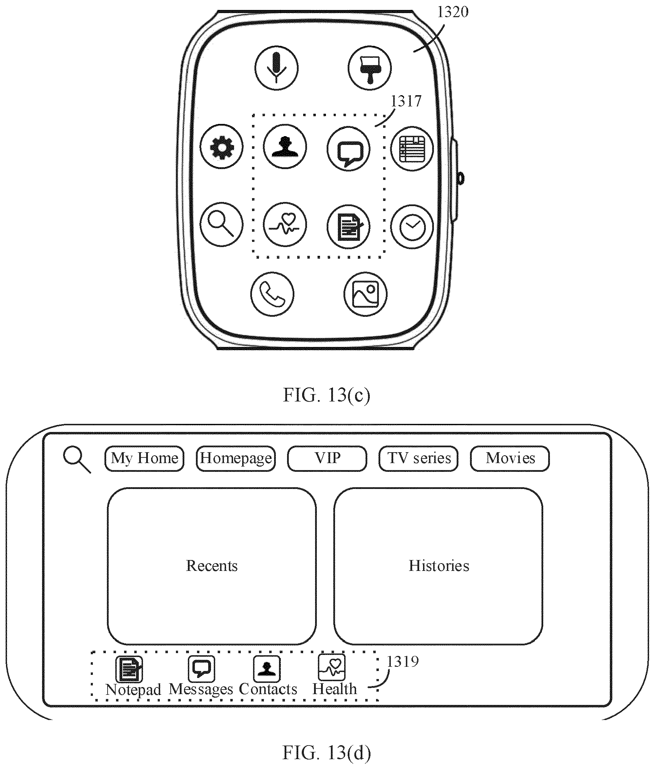

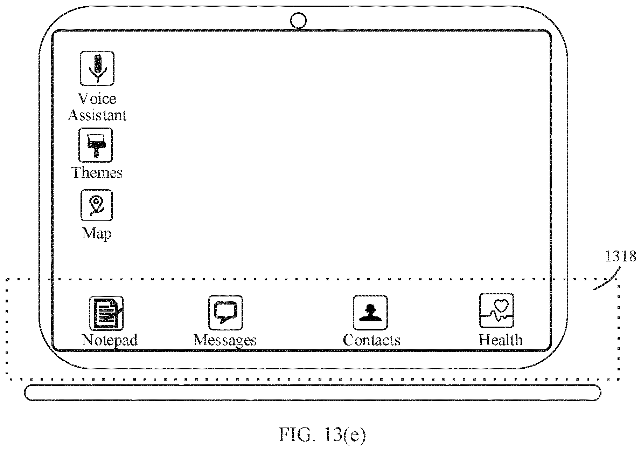

It is assumed that the electronic device group includes a mobile phone, a tablet computer, a smartwatch, a television, and a notebook computer. The mobile phone displays an interface 1310 including a Dock bar 1311, and the Dock bar 1311 includes a Health application icon 1312, a Contacts application icon 1313, a Notepad application icon 1314, a Messages application icon 1315, and the like. In this case, settings of the Dock bar of the mobile phone may be synchronized between the tablet computer, the smartwatch, the television, and the notebook computer. Specifically, after the settings of the Dock bar are synchronized, the application icons are also displayed on a Dock bar 1316 of the tablet computer, a Dock bar 1318 of the computer, and a Dock bar 1319 of the television. Optionally, if the second electronic device does not include the Dock bar, the second electronic device may use an area on a home screen to display the application icons on the Dock bar, where the area may be obtained by the second electronic device through division according to a preset rule, or may be specified by the user. For example, as shown in FIG. 13(c), the smartwatch displays an interface 1320 including an area 1317, and the area 1317 includes the foregoing application icons.

In this embodiment of this application, personalized information such as a home screen layout, classification information of an application, settings of a Dock bar may be synchronized between the electronic devices that form the electronic device group. After the user performs personalized setting on one electronic device, another electronic device may automatically complete the personalized setting, to save time of the user. Further, each device may further perform adaptation based on a feature of the device, to provide a more suitable home screen for the user.

FIG. 11(a) to FIG. 11(c) to FIG. 13(a) to FIG. 13(e) each show a case in which personalized information can be synchronized between electronic device groups. The following describes how to install and uninstall an application.

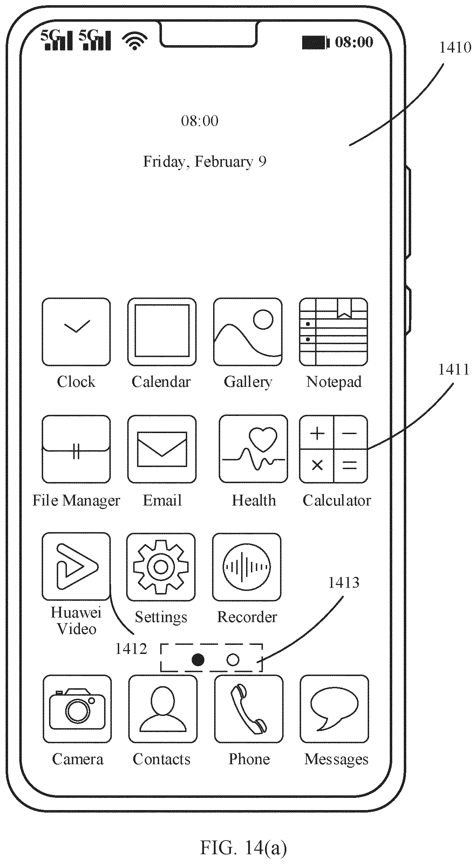

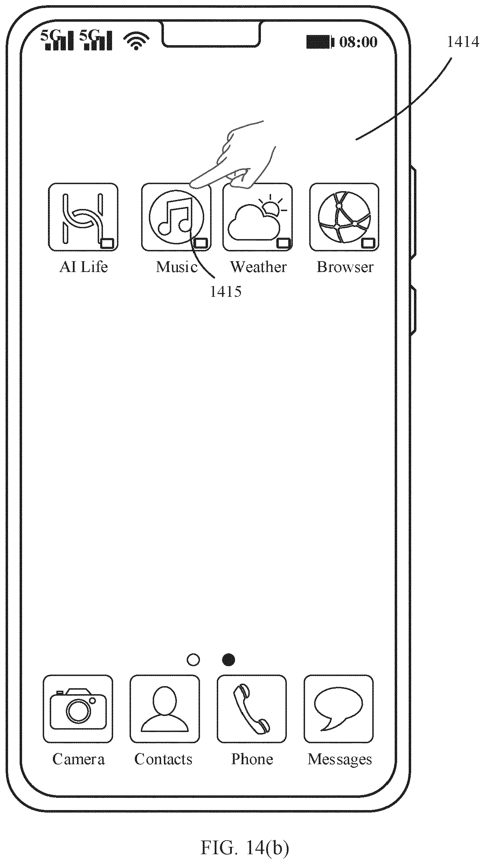

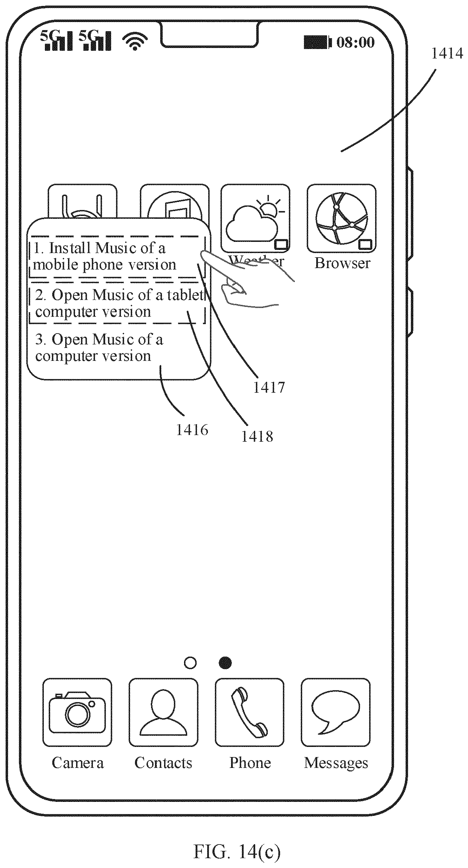

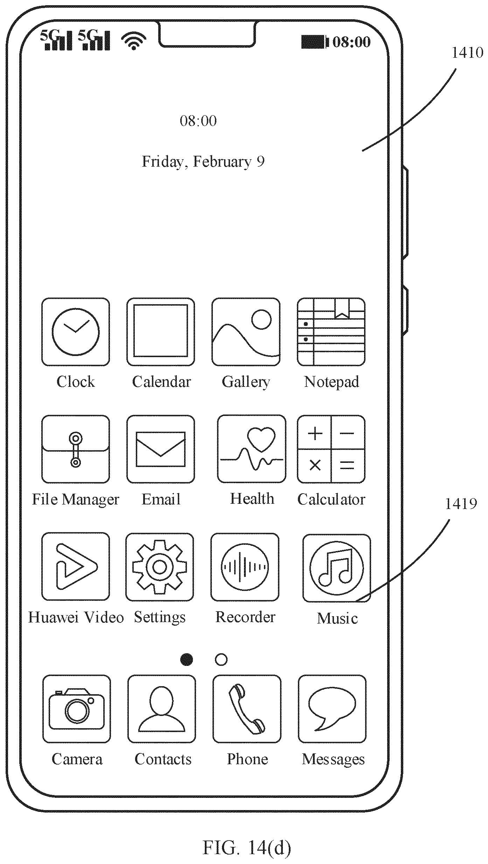

As shown in FIG. 14(a) and FIG. 14(b), local applications are displayed in an interface 1410 of a first electronic device, and shared applications are displayed in an interface 1414 of the first electronic device. A user may select, in the interface 1414, an application that needs to be installed. As shown in FIG. 14(b) and FIG. 14(c), in response to touching and holding a Music application icon 1415 by the user, the mobile phone displays a list 1416, where the list 1416 includes an option 1417 used to install a Music application of a mobile phone version, an option 1418 used to open a Music application of a tablet computer version, and an option used to open a Music application of a computer version. If the mobile phone detects that the user taps the option 1417, the mobile phone installs the Music application of the mobile phone. After the mobile phone completes installation of the Music application of the mobile phone version in response to the operation of tapping the option 1417 by the user, the mobile phone may display, in the interface 1410, an icon 1419 used to open the Music application of the mobile phone version. In this way, the user does not need to search AppGallery for the application and download the application, to save time of the user.

As described above, when the user taps an icon of a shared application on the first electronic device, if a distance between the second electronic device on which the shared application is installed and the first electronic device is greater than a first threshold, the application may be installed on the first electronic device in response to an operation of tapping the icon of the shared application by the user. For example, no Music application is installed on the mobile phone, and a Music application is installed on the tablet computer. The mobile phone displays, in the interface 1414, the icon 1415 used to open the Music application of the tablet computer version. When the Music application icon 1415 is tapped on the mobile phone, if a distance between the mobile phone and the tablet computer is greater than the first threshold, the Music application is installed on the mobile phone.

It should be noted that installation data of the shared application may be transmitted through Bluetooth, Wi-Fi, NFC, or the like. The installed application may be a conventional application, or may be a quick application, an FA, or the like.

Installing the shared application based on the FA may be downloading and installing a corresponding FA based on a function of the shared application used by the user. For example, a Music application is installed. When installing the Music application, the electronic device first downloads and installs an FA on a home page. After the FA on the home page is installed, when detecting, on the home page, an operation of selecting a function on the home page by the user, the electronic device downloads and installs, in response to the operation, the FA of the function on the home page that is selected by the user.

It should be understood that the user may select different installation manners based on a requirement, or the electronic device may independently select different installation manners.

FIG. 14(a) to FIG. 14(d) show an application installation method according to an embodiment of this application. The following describes an application uninstallation method.

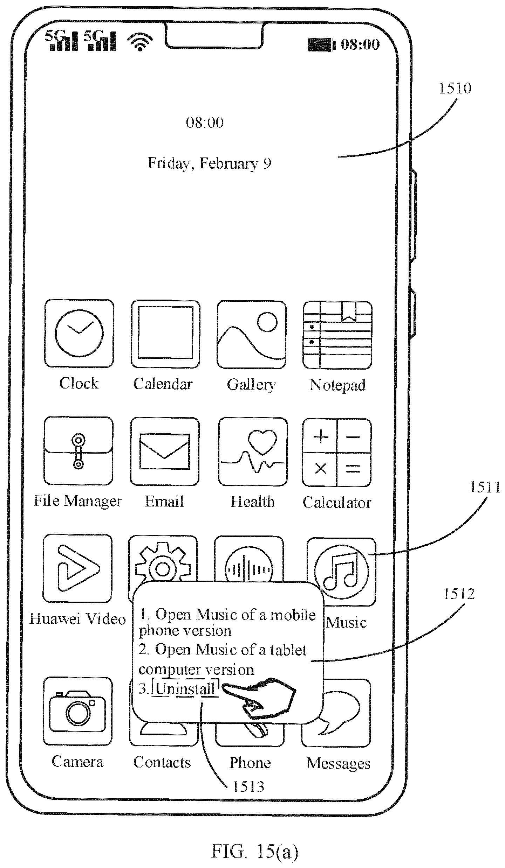

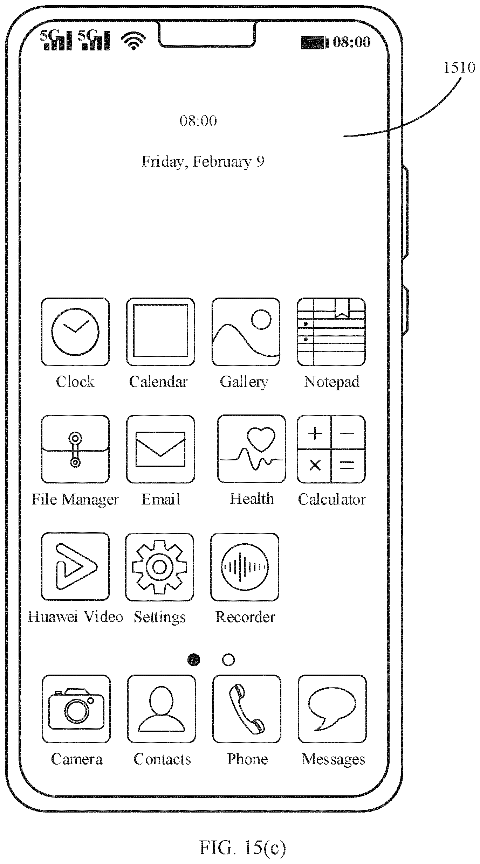

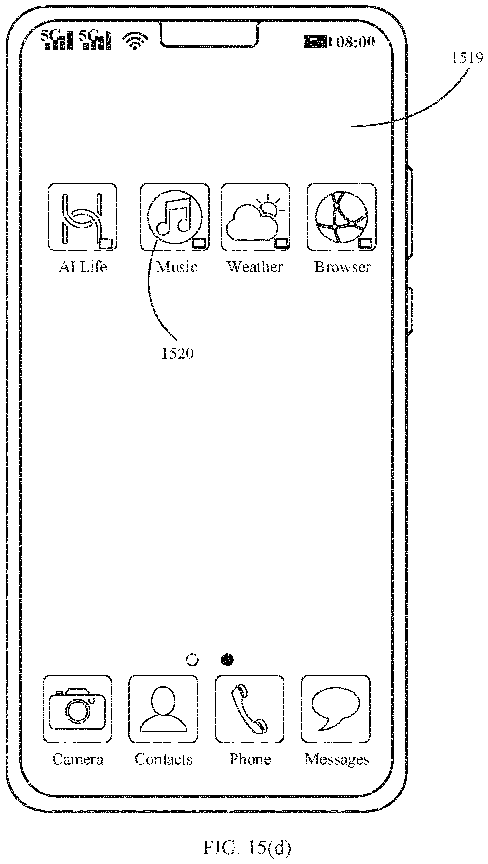

FIG. 15(a) to FIG. 15(d) show another group of GUIs according to an embodiment of this application.

As shown in FIG. 15(a), the first electronic device displays an interface 1510, where the interface includes an icon 1511 of an application, and the application is installed on both the mobile phone and the tablet computer. The first electronic device enters an application uninstallation procedure in response to detecting an operation of uninstalling an application by the user. For example, the operation of uninstalling the shared application by the user may be as follows: In response to detecting that a time period for which the user presses an icon of the application is greater than a second threshold, the electronic device displays a list 1512, where the display list includes an uninstallation option, and the user taps the uninstallation option to enter an uninstallation procedure of the application. It should be noted that an application uninstallation method is not limited thereto. The user may also uninstall the application through a control center.

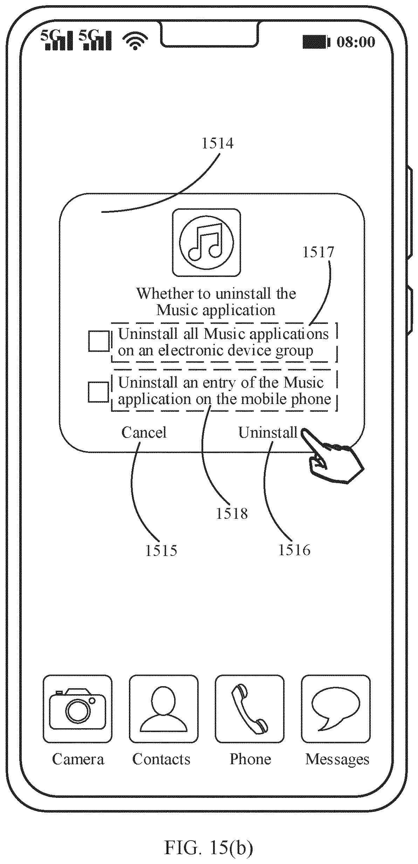

As shown in FIG. 15(b), the first electronic device enters the uninstallation procedure, and may display an uninstallation operation interface 1514. The uninstallation operation interface 1514 may include an Uninstall key 1515 and a Cancel key 1516. It may be understood that, the first electronic device exits the uninstallation procedure in response to tapping the Cancel key 1516 by the user.

Optionally, the uninstallation operation interface 1514 may further include a control 1517 and/or a control 1518. The control 1517 may be used to uninstall a same shared application installed on another electronic device. For specific content, refer to the following description. The control 1518 may be used to uninstall a shared application icon displayed on the first electronic device. When neither the control 1517 nor the control 1518 is selected, the first electronic device uninstalls an application installed on the first electronic device, and retains an application installed on the another electronic device and the shared application icon displayed on the first electronic device. When the control 1518 is selected, the first electronic device further uninstalls the shared application icon displayed on the first electronic device when uninstalling the application installed on the first electronic device.

As shown in FIG. 15(b) to FIG. 15(d), if the mobile phone detects that the controls 1517 and 1518 are not selected when the user taps the Uninstall key 1516, the mobile phone uninstalls a Music application of a mobile phone version, and retains a Music application installed on another device. The icon 1511 used to open the Music application of the mobile phone version is not displayed in the interface 1510. An icon 1520 used to open a Music application of a tablet computer version is retained in the interface 1519. It may be understood that, if the mobile phone detects that the control 1518 is selected when the user taps the Uninstall key 1516, the mobile phone uninstalls the Music application of the mobile phone version, and does not display, on the mobile phone, a shared application icon used to open a Music application installed on another device, and the icon 1520 is not displayed in the interface 1519. If the mobile phone detects that the control 1517 is selected when the user taps the Uninstall key 1516, the mobile phone uninstalls the Music application of the mobile phone version, and indicates the tablet computer to uninstall the Music application installed on the tablet computer.

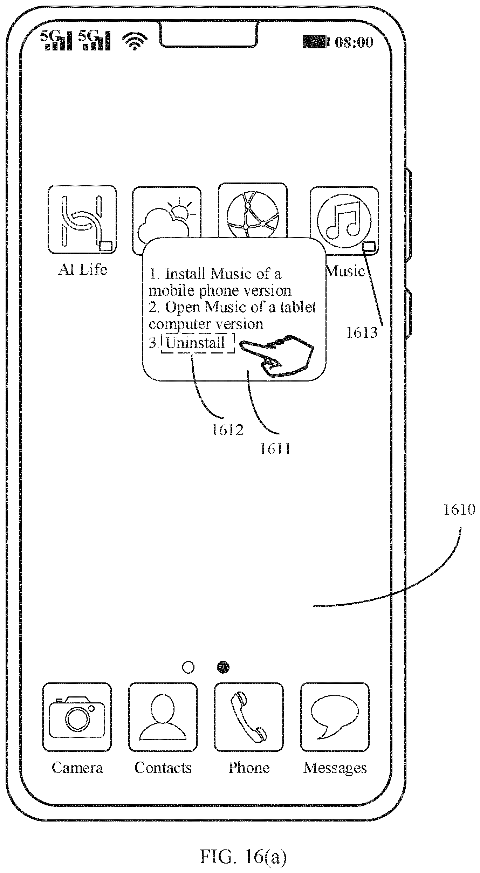

FIG. 16(a) to FIG. 16(c) show another group of GUIs according to an embodiment of this application.

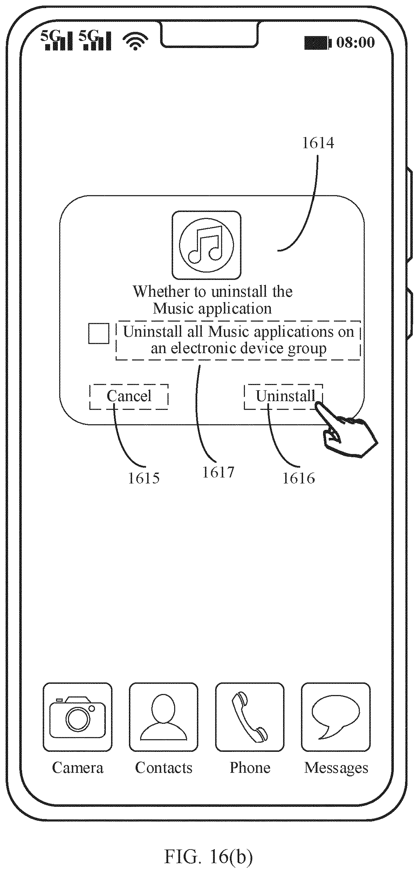

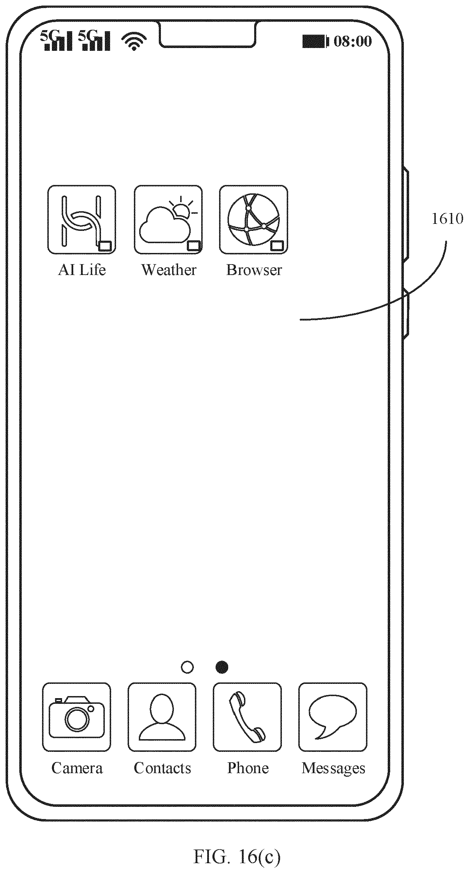

As shown in FIG. 16(a), an interface 1610 of the first electronic device (for example, the mobile phone) displays a shared application icon (for example, an icon 1613 used to open a Music application of a tablet computer version). The first electronic device detects that the user performs an uninstallation operation, and may enter an uninstallation procedure in response to the operation. For descriptions of performing the uninstallation operation by the user, refer to the foregoing embodiment. Details are not described herein again. As shown in FIG. 16(b), the first electronic device enters the application uninstallation procedure, and may display an uninstallation operation interface 1614. The uninstallation operation interface 1614 may include an Uninstall key 1615 and a Cancel key 1616. Optionally, the uninstallation operation interface 1614 may further include a control 1617, and the control 1617 is used to uninstall a shared application on another electronic device. As shown in FIG. 16(b) and FIG. 16(c), if the first electronic device detects that the control 1617 is not selected when the user taps the Uninstall key 1516, the first electronic device deletes the shared application icon displayed on the first electronic device (the icon 1613 is not displayed in the interface 1610). It may be understood that if the control 1617 is selected, the first electronic device may further indicate the tablet computer to uninstall the application installed on the tablet computer.

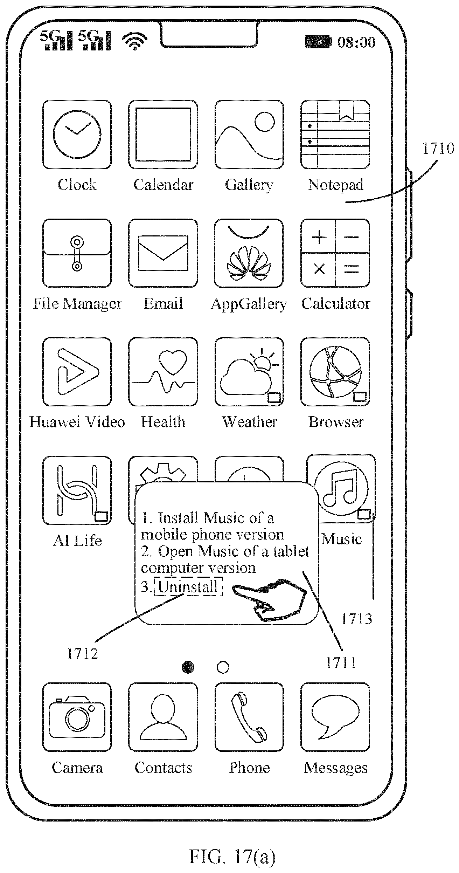

FIG. 17(a) to FIG. 17(c) show another group of GUIs according to an embodiment of this application.

As shown in FIG. 17(a), the first electronic device displays an interface 1710, where the interface 1710 displays an icon of a local application and an icon of a shared application. It is assumed that an electronic device group includes a first electronic device (for example, a mobile phone) and a second electronic device (for example, a tablet computer), no Music application is installed on the first electronic device, a Music application is installed on the second electronic device, and the first electronic device may display an icon 1713 used to open a shared application.

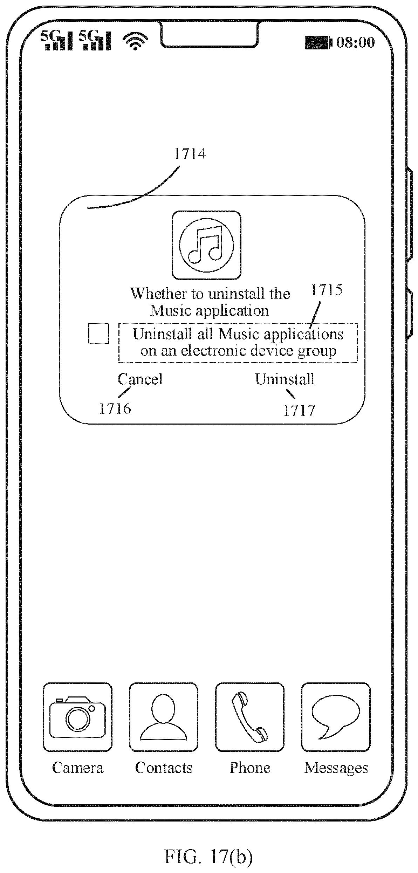

As shown in FIG. 17(a) and FIG. 17(b), the first electronic device detects that the user performs an application uninstallation operation, and may enter an application uninstallation procedure in response to the operation. For descriptions of performing the shared application uninstallation operation by the user, refer to the foregoing embodiment. Details are not described herein again. As shown in FIG. 17(b), the first electronic device enters the application uninstallation procedure, and may display an uninstallation operation interface 1714. The uninstallation operation interface may include a Cancel key 1716 and an Uninstall key 1717.

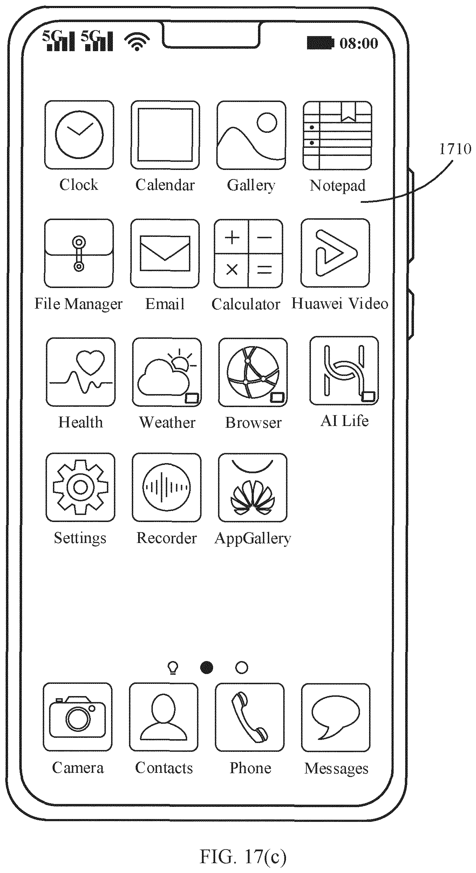

When no shared application is installed on the first electronic device, the first electronic device may uninstall an icon of the shared application by default. For example, as shown in FIG. 17(b) and FIG. 17(c), no Music application of a mobile phone version is installed on the mobile phone. Therefore, when the mobile phone uninstalls a Music application, the first electronic device may uninstall an icon of the Music application by default.

Optionally, the uninstallation operation interface may further include a control 1715, and the control 1715 may be used to uninstall a shared application on another electronic device. For related descriptions, refer to the control 1617 in the foregoing embodiment. Details are not described herein again.

It should be noted that the GUIs shown in FIG. 17(a) to FIG. 17(c) show the uninstallation procedure performed when no Music application is installed on the first electronic device. The following describes an uninstallation procedure performed when a Music application is installed on both the first electronic device and the second electronic device.

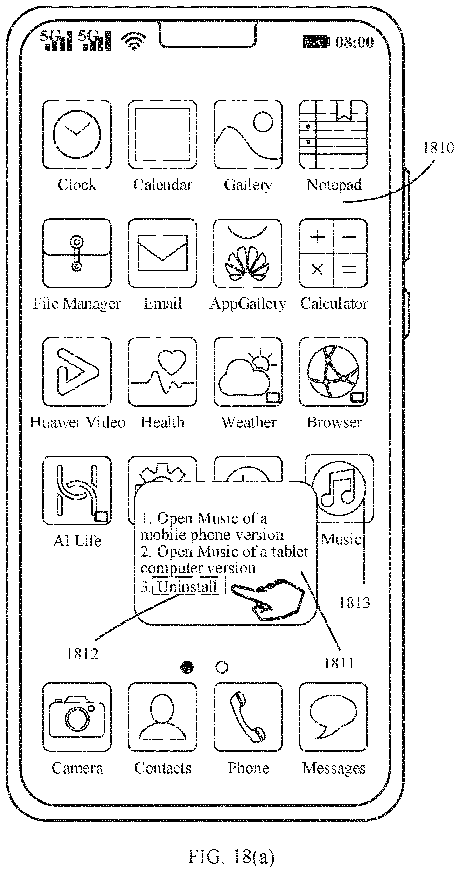

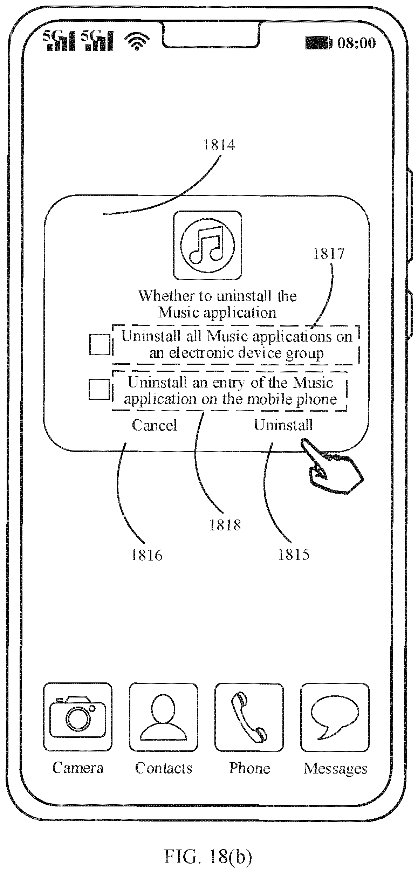

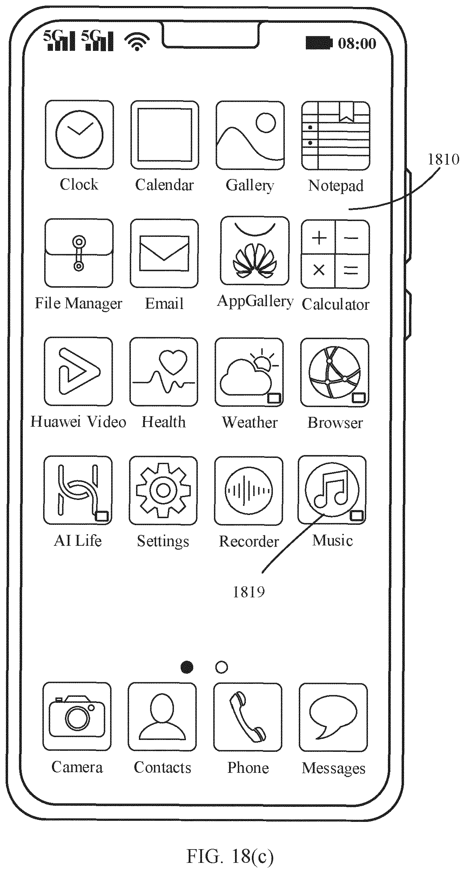

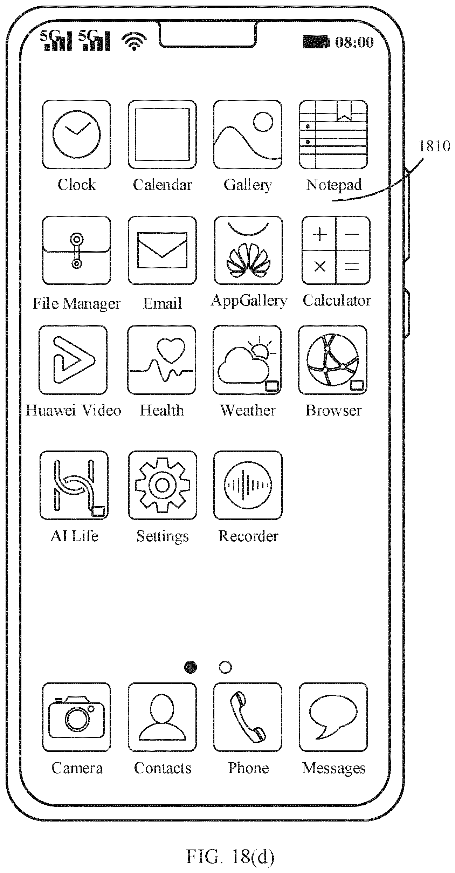

As shown in FIG. 18(a), the first electronic device displays an interface 1810, where the interface 1810 displays an icon of a local application and an icon of a shared application. It is assumed that an electronic device group includes a first electronic device (for example, a mobile phone) and a second electronic device (for example, a tablet computer), a Music application is installed on both the first electronic device and the second electronic device, and the first electronic device integrates an icon used to open a local application and an icon used to open a shared application for display, that is, displays an icon 1813. As shown in FIG. 18(a) and FIG. 18(b), the first electronic device detects that the user performs an application uninstallation operation, and may enter an application uninstallation procedure in response to the operation. For descriptions of performing the shared application uninstallation operation by the user, refer to the foregoing embodiment. Details are not described herein again. As shown in FIG. 18(b), the first electronic device enters the uninstallation procedure, and may display an uninstallation operation interface 1814. When the Music application is installed on both the first electronic device and the second electronic device, the Music application installed on the first electronic device may be uninstalled by default. As shown in FIG. 18(b) and FIG. 18(c), during uninstallation, the mobile phone uninstalls, by default, the Music application installed on the mobile phone. An icon 1819 may still be retained after the Music application installed on the mobile phone is uninstalled. It may be understood that, the icon 1819 is tapped at this time to open the Music application installed on the second electronic device.

Optionally, the uninstallation operation interface may further include a control 1817 and a control 1818. The control 1817 is used to uninstall a Music application installed on another device, and the control 1818 is used to uninstall a shared application icon displayed on a local device. For related descriptions, refer to the control 1517 and the control 1518 in the foregoing embodiment. Details are not described herein again.

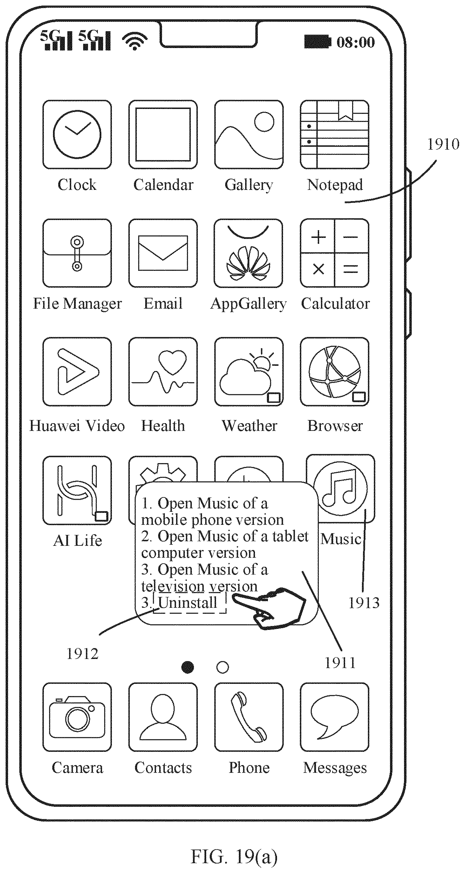

FIG. 19(a) to FIG. 19(c) show another group of GUIs according to an embodiment of this application.

As shown in FIG. 19(a), the first electronic device displays an interface 1910, where the interface 1910 includes an icon of a local application and an icon of a shared application.

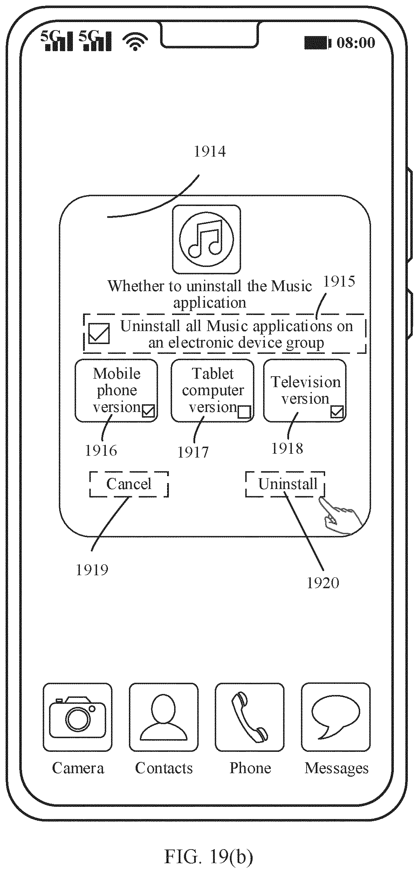

As shown in FIG. 19(a) and FIG. 19(b), the first electronic device detects that the user performs an uninstallation operation, and may enter an application uninstallation procedure in response to the operation. For descriptions of performing the uninstallation operation by the user, refer to the foregoing embodiment. Details are not described herein again. As shown in FIG. 19(b), the first electronic device enters the application uninstallation procedure, and may display an uninstallation operation interface 1914. The uninstallation operation interface 1914 may include a Cancel key 1919 and an Uninstall key 1920.

Optionally, the uninstallation operation interface may further include a control 1915, and the control 1915 is used to choose whether to uninstall the application installed on another electronic device. The uninstallation operation interface 1914 may further include one or more controls that respectively correspond to the applications installed on different electronic devices, for example, a control 1916, a control 1917, and a control 1918. The control 1916 corresponds to the application installed on the mobile phone, the control 1917 corresponds to the application installed on the tablet computer, and the control 1918 corresponds to the application installed on the television. It should be noted that the first electronic device may display the controls 1916 to 1918 in response to detecting that the user selects the control 1915, or may display the control 1915 and the controls 1916 to 1918 when displaying the interface 1914.

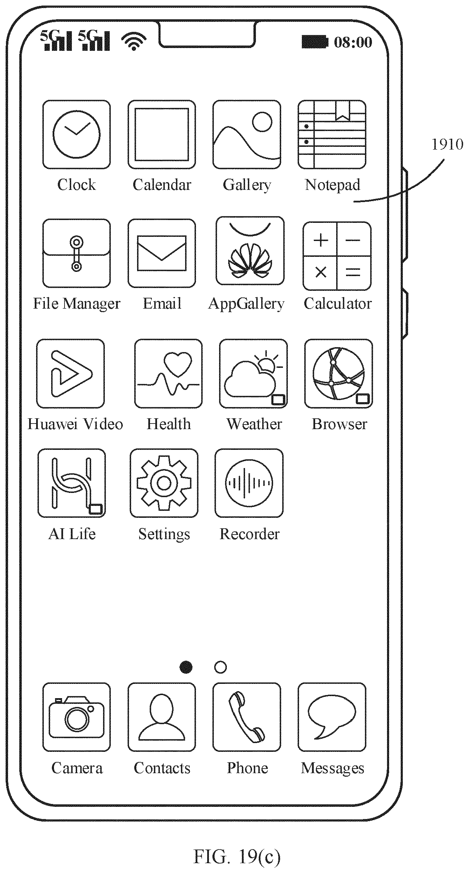

It may be understood that, as shown in FIG. 19(b) and FIG. 19(c), if the mobile phone detects that the control 1916 is selected when the user taps the Uninstall key 1920, the mobile phone deletes a Music application installed on the mobile phone. If the control 1918 is selected, the mobile phone may send an uninstallation instruction to the television, and the television deletes a Music application installed on the television. If the control 1917 is not selected, a Music application installed on the tablet computer is not uninstalled.

Optionally, when an application installed on another electronic device is chosen to be uninstalled on the first electronic device, user identity verification may be performed. After the user identity verification succeeds, the application installed on the another electronic device is uninstalled. For example, the user identity verification may be password verification and/or biometric information verification (for example, fingerprint verification or palmprint verification).

According to the application uninstallation method in FIG. 15(a) to FIG. 15(d) to FIG. 19(a) to FIG. 19(c), when the user uninstalls an application, the user does not need to perform an uninstallation operation on different electronic devices one by one, and can uninstall an application on another device on the first electronic device, to save time of the user.

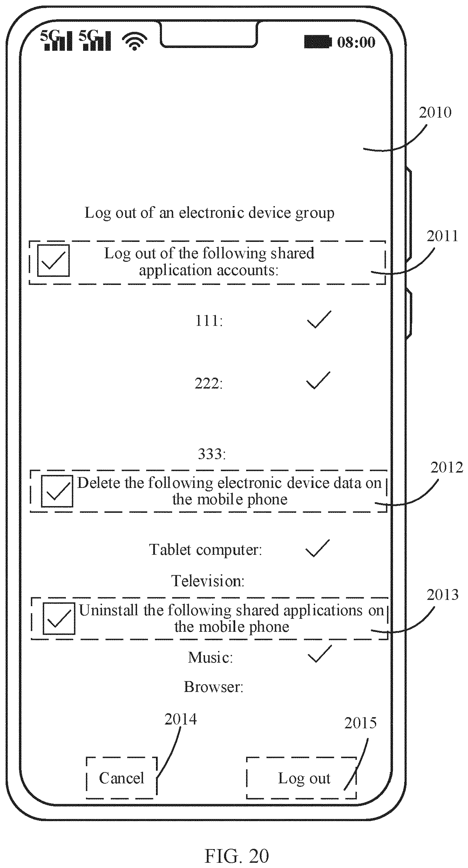

The following uses FIG. 20 as an example to describe a method for logging out of an electronic device group.

As shown in FIG. 20, an interface 2010 may be displayed in response to a case in which the first electronic device detects an operation that the user logs out of the electronic device group. The interface 2010 may include a Cancel key 2014 and a Log-out key 2015. In response to tapping the Cancel key 2014 by the user, the first electronic device cancels a procedure of logging out of the electronic device group. In response to tapping the Log-out key 2015 by the user, the first electronic device logs out of the electronic device group, and no longer shares an application and personalized information with another electronic device in the electronic device group.

Optionally, the interface 2010 may further include a control 2011, so that the user chooses whether to no longer share an application account. The shared application account may be understood as a same application account used when the electronic device group logs in to a same application. For example, an account 111 is an account of a Huawei Video application, the electronic device group includes a mobile phone and a tablet computer, and both the mobile phone and the tablet computer use the account 111 when logging in to the Huawei Video application. After the user chooses to log out of the shared application account, the mobile phone and the tablet computer no longer share the account 111, and the user may use an application account different from that of the tablet computer when logging in to Huawei Video on the mobile phone.

As shown in FIG. 20, the mobile phone displays one or more shared application accounts (for example, the account 111 is an account of a Huawei Video application, an account 222 is an account of a Music application, and an account 333 is an account of a Health application) in the interface 2010, and determines, based on selection of the user, whether to log out of the shared application account. For example, if the user selects the account 111 and the account 222, the mobile phone no longer shares the account of the Music application and the account of the Huawei Video application with another electronic device, and the mobile phone logs out of the account 111 for logging in to the Music application and the account 222 for logging in to the Huawei Video application. It may be understood that, in addition to logging out of the application account logged in to on the mobile phone side, the mobile phone may indicate another device to log out of a corresponding application account.

Optionally, the interface 2010 may further include a control 2012, so that the user chooses whether to delete data of the electronic device group. As shown in FIG. 20, in response to a case in which the mobile phone detects that the user selects the control 2012, the mobile phone displays, in the interface 2010, an option used to delete data of each electronic device (for example, the tablet computer or the television) in the electronic device group. For example, when logging out of the electronic device group, if the option used to delete the data of the tablet computer is selected and the option used to delete the data of the television is not selected, the mobile phone deletes data related to the tablet computer in the mobile phone, and retains data related to the television.

Optionally, the interface 2010 may further include a control 2013, so that the user chooses whether to uninstall a shared application icon. As shown in FIG. 20, the mobile phone may display, in the interface 2010, an option used to delete a shared application (for example, a Music application or a Browser application) on the mobile phone. When logging out of the electronic device group, if an option used to delete a shared application icon of a Music application is selected, the mobile phone may uninstall a shared application icon used to open a Music application installed on another device.

In this embodiment of this application, when logging out of the electronic device group, the user may choose to log out of the shared application icon, delete data of the electronic device group, uninstall the shared application icon, and does not need to perform an operation on different electronic devices one by one, to save time of the user and uninstall information more completely.

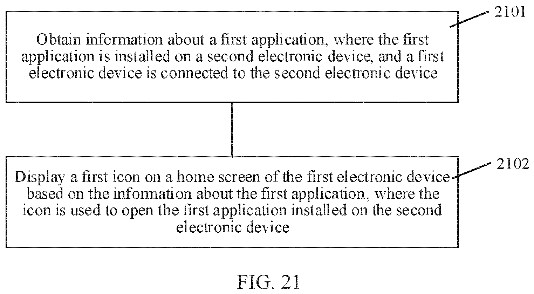

With reference to the foregoing embodiments and related accompanying drawings, an embodiment of this application provides a home screen sharing method. The method may be implemented by an electronic device (for example, a mobile phone or a tablet computer) that includes a touchscreen and that is shown in FIG. 1 or FIG. 2. FIG. 21 is a schematic flowchart of a home screen sharing method according to an embodiment of this application. As shown in FIG. 21, the method may include the following steps:

S2101: Obtain information about a first application, where the first application is installed on a second electronic device, and a first electronic device is connected to the second electronic device.

S2102: Display a first icon on a home screen of the first electronic device based on the information about the first application, where the icon is used to open the first application installed on the second electronic device.

In a possible implementation, the first icon includes a thumbnail of the second electronic device.

Specifically, a thumbnail identifying the second electronic device is displayed in a lower right corner of the first icon.

Alternatively, a display form of the first icon may be highlight display, grayscale display, or shadow display.

In a possible implementation, the method further includes: receiving a first operation of tapping the first icon by a user; and in response to the first operation, obtaining interface information of the first application running on the second electronic device, and displaying an interface of the first application on the first electronic device based on the interface information of the first application.

Specifically, after receiving the first operation of tapping the first icon by the user, the first electronic device may be connected to the second electronic device, obtain the interface information of the first application in the second electronic device, and display the interface of the first application in the first electronic device in a projection display manner.

Optionally, when displaying the interface of the first application, the first electronic device may display device information of the first application. For example, as shown in FIG. 6(f) and FIG. 6(g), the first electronic device displays information "From a tablet computer" in the interface.

In another possible implementation, the method further includes: receiving a first operation of tapping the first icon by a user; installing the first application on the first electronic device in response to the first operation; and running the first application and displaying an interface of the first application on the first electronic device.

Specifically, after the first electronic device receives the first operation of tapping the first icon by the user, the first electronic device may display the interface of the first application after installing the first application.

When the first electronic device installs the first application, the first electronic device may download installation data of the first application through AppGallery, or the second electronic device sends the installation data of the first application to the first electronic device.

Specifically, the first electronic device may obtain installation data of the first application, or may download and install the first application based on an FA.

It should be noted that, the first electronic device may determine, based on a distance between the first electronic device and the second electronic device, a manner of displaying the interface of the first application. When the distance between the first electronic device and the second electronic device is less than a preset distance, the first electronic device may be connected to the second electronic device, and display the interface of the first application through projection. When the distance between the first electronic device and the second device is greater than the preset distance, the first electronic device may display the interface of the first application after installing the first application.

It should be understood that the user may choose, based on a requirement, whether to display the interface of the first application through projection. When the user presets that the interface of the first application is not displayed through projection, even if the distance between the first electronic device and the second electronic device is less than the preset distance, the interface of the first application is not displayed through projection.

In a possible implementation, the home screen includes a first page, the first page includes a first icon of the first application and a second icon of a second application, and the second application is installed on the first electronic device.

For example, as shown in FIG. 8, the first electronic device may display, on a same page, an icon of a local application and an icon of an application installed on the second electronic device.

In a possible implementation, the home screen further includes a first identifier of the second electronic device; and in response to a second operation performed by the user on the first identifier, the home screen displays the first icon of the first application installed on the second electronic device, and does not display the second icon of the second application installed on the first electronic device.

In a possible implementation, the home screen includes a first page and a second page, the first page is used to display a first icon of the first application installed on the second electronic device, and the second page is used to display a second icon of a second application installed on the first electronic device.

For example, as shown in FIG. 5(a) and FIG. 5(b), the first electronic device displays, on different pages, an icon of a local application and an icon of an application installed on the second electronic device.

In a possible implementation, the method further includes: receiving a third operation performed by the user on the first icon; displaying a first list in response to the third operation, where the first list includes a first option; and installing the first application on the first electronic device in response to a fourth operation performed by the user on the first option.

For example, the third operation may be that the user touches and holds the first icon.

In a possible implementation, the method further includes: receiving a fifth operation performed by the user on the first icon; displaying a second list in response to the fifth operation, where the second list includes a second option; and skipping displaying the first icon on the first electronic device in response to a sixth operation performed by the user on the second option; or uninstalling the first application installed on the second electronic device.

In a possible implementation, the method further includes: displaying a third icon of a third application on the home screen, where the third application is installed on the first electronic device and the second electronic device; displaying a third list in response to a seventh operation performed by a user on the third icon, where the third list includes a third option and a fourth option, the first option is used to open the third application installed on the first electronic device, and the second option is used to open the third application installed on the second electronic device; if an eighth operation performed by the user on the third option is detected, running the third application and displaying an interface of the third application on the first electronic device; and if a ninth operation performed by the user on the fourth option is detected, obtaining interface information of the third application running on the second electronic device, and displaying the interface of the third application on the first electronic device based on the interface information of the third application.

For example, the sixth operation may be that the user touches and holds the first icon.

In a possible implementation, the third list further includes a fifth option, and the fifth option is used to uninstall the third application.

In a possible implementation, the uninstalling the third application includes: uninstalling the third application installed on the first electronic device; uninstalling the third application installed on the second electronic device; uninstalling the third application installed on the first electronic device and the third application installed on the second electronic device, and skipping displaying the third icon on the first electronic device; uninstalling the third application installed on the first electronic device, and further displaying the third icon on the first electronic device, where the third icon is used to open the third application installed on the second electronic device; or uninstalling the third application installed on the first electronic device, and skipping displaying the third icon on the first electronic device.

For example, as shown in FIG. 15(a) to FIG. 15(d) to FIG. 19(a) to FIG. 19(c), the first electronic device may select different options to perform different uninstallation functions.

In a possible implementation, the method further includes: obtaining information about a fourth application and information about a fifth application, where the fourth application and the fifth application are installed on the second electronic device, and a fourth icon of the fourth application and a fifth icon of the fifth application are displayed in a same folder of the second electronic device; and displaying a folder on the home screen of the first electronic device, where the folder includes a sixth icon of the fourth application and a seventh icon of the fifth application.

For example, as shown in FIG. 12(a) to FIG. 12(d), the first electronic device may synchronize information about a classification folder in the second electronic device.

In a possible implementation, the method further includes: connecting the first electronic device to a display; displaying an interface on the display, where the interface includes an identifier of the first electronic device; and displaying, by the first electronic device, the home screen of the first electronic device on the display if an operation of tapping the identifier by the user is detected.

In a possible implementation, the method further includes: displaying, by the first electronic device on the first page based on a home screen layout of the second electronic device, an icon of an application installed on the second electronic device.

In a possible implementation, the method further includes: displaying, by the first electronic device, an exit interface if an operation performed by the user to indicate to disconnect from the second electronic device is detected, where the exit interface includes a sixth option and/or a seventh option and/or an eighth option, the sixth option is used to log out of an account of the first application, the seventh option is used to uninstall data stored by the second electronic device in the first electronic device, and the eighth option is used to uninstall the first application.

In this embodiment of this application, a plurality of electronic devices may share an application and personalized setting. After an application is installed and personalized setting is performed on one electronic device, an icon of the application may be displayed on another electronic device, and the another electronic device may synchronize the personalized setting. Therefore, the user can use the application on the another electronic device without downloading and installing the application on the another electronic device through AppGallery, to save time of the user.

The foregoing embodiments may be used separately, or may be used in combination to implement different technical effects.

In the foregoing embodiments provided in this application, the method provided in embodiments of this application is described from a perspective of an electronic device serving as an execution body. To implement the functions in the method provided in the foregoing embodiments of this application, the electronic device may include a hardware structure and/or a software module, to implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

An embodiment of this application further provides an electronic device, including a display, a processor, a memory, one or more sensors, a power button, an application, and a computer program. The foregoing components may be connected through one or more communication buses. The one or more computer programs are stored in the memory and are configured to be executed by the one or more processors. The one or more computer programs include instructions, and the instructions may be used to enable the electronic device to perform the steps of the interface display method in the foregoing embodiments.

For example, the processor may be specifically the processor 110 shown in FIG. 2, the memory may be specifically the internal memory 120 shown in FIG. 2 and/or an external memory connected to the electronic device, the display may be specifically the display 130 shown in FIG. 2, the sensor may be specifically one or more sensors in the sensor module 150 shown in FIG. 2, and the power button may be the power button 141 shown in FIG. 2. This is not limited in this embodiment of this application.

In addition, an embodiment of this application further provides a graphical user interface (graphical user interface, GUI) on an electronic device. The graphical user interface specifically includes a graphical user interface displayed when the electronic device performs the foregoing method embodiments.

As used in embodiments, depending on the context, the term "when" or "after" can be interpreted as "if ...", "after ...", "in response to determining that ...", or "in response to detecting that...". Similarly, depending on the context, the phrase "when it is determined that ..." or "if it is detected that ... (a stated condition or event)" can be interpreted as "if it is determined that ...", "in response to determining that...", "when it is detected that ... (the stated condition or event)", or "in response to detecting that ... (the stated condition or event)".

All or some of the foregoing embodiments may be implemented by using software, hardware, firmware, or any combination thereof. When the software is used to implement embodiments, all or some embodiments may be implemented in a form of a computer program product. The computer program product includes one or more computer instructions. When the computer program instructions are loaded and executed on a computer, the procedure or functions according to embodiments of the present invention are all or partially generated. The computer may be a general-purpose computer, a dedicated computer, a computer network, or other programmable apparatuses. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired manner (for example, a coaxial cable, an optical fiber, or a digital subscriber line (DSL)) or a wireless manner (for example, infrared, radio, or microwave). The computer-readable storage medium may be any usable medium that can be accessed by a computer, or a data storage device, for example, a server or a data center, integrating one or more usable media. The usable medium may be a magnetic medium (for example, a floppy disk, a hard disk, or a magnetic tape), an optical medium (for example, DVD), a semiconductor medium (for example, a solid-state drive (Solid-State Drive, SSD)), or the like. In a case in which no conflict occurs, the solutions in the foregoing embodiments may be combined for use.

## Claims

1. A home screen sharing method, wherein the method is applied to a first electronic device, and the method comprises:
obtaining information about a first application, wherein the first application is installed on a second electronic device, and the first electronic device is connected to the second electronic device; and
displaying a first icon on a home screen of the first electronic device based on the information about the first application, wherein the icon is used to open the first application installed on the second electronic device.

2. The method according to claim 1, wherein the first icon comprises a thumbnail of the second electronic device.

3. The method according to claim 1 or 2, wherein the method further comprises:
receiving a first operation of tapping the first icon by a user; and
in response to the first operation, obtaining interface information of the first application running on the second electronic device, and displaying an interface of the first application on the first electronic device based on the interface information of the first application.

4. The method according to claim 1 or 2, wherein the method further comprises:
receiving a first operation of tapping the first icon by a user;
installing the first application on the first electronic device in response to the first operation; and
running the first application and displaying an interface of the first application on the first electronic device.

5. The method according to any one of claims 1 to 4, wherein the home screen comprises a first page, the first page comprises the first icon of the first application and a second icon of a second application, and the second application is installed on the first electronic device.

6. The method according to claim 5, wherein the home screen further comprises a first identifier of the second electronic device; and in response to a second operation performed by the user on the first identifier, the home screen displays the first icon of the first application installed on the second electronic device, and does not display the second icon of the second application installed on the first electronic device.

7. The method according to any one of claims 1 to 4, wherein the home screen comprises a first page and a second page, the first page is used to display the first icon of the first application installed on the second electronic device, and the second page is used to display a second icon of a second application installed on the first electronic device.

8. The method according to any one of claims 1 to 7, wherein the method further comprises:
receiving a third operation performed by the user on the first icon;
displaying a first list in response to the third operation, wherein the first list comprises a first option; and
installing the first application on the first electronic device in response to a fourth operation performed by the user on the first option.

9. The method according to any one of claims 1 to 8, wherein the method further comprises:
receiving a fifth operation performed by the user on the first icon;
displaying a second list in response to the third operation, wherein the second list comprises a second option; and
skipping displaying the first icon on the first electronic device in response to a sixth operation performed by the user on the second option; or
uninstalling the first application installed on the second electronic device.

10. The method according to claim 1, wherein the method further comprises:
displaying a third icon of a third application on the home screen, wherein the third application is installed on the first electronic device and the second electronic device;
displaying a third list in response to a seventh operation performed by a user on the third icon, wherein the third list comprises a third option and a fourth option, the first option is used to open the third application installed on the first electronic device, and the second option is used to open the third application installed on the second electronic device;
if an eighth operation performed by the user on the third option is detected, running the third application and displaying an interface of the third application on the first electronic device; and
if a ninth operation performed by the user on the fourth option is detected, obtaining interface information of the third application running on the second electronic device, and displaying the interface of the third application on the first electronic device based on the interface information of the third application.

11. The method according to claim 10, wherein the third list further comprises a fifth option, and the fifth option is used to uninstall the third application.

12. The method according to claim 11, wherein the uninstalling the third application comprises:
uninstalling the third application installed on the first electronic device;
uninstalling the third application installed on the second electronic device;
uninstalling the third application installed on the first electronic device and the third application installed on the second electronic device, and skipping displaying the third icon on the first electronic device;
uninstalling the third application installed on the first electronic device, and further displaying the third icon on the first electronic device, wherein the third icon is used to open the third application installed on the second electronic device; or
uninstalling the third application installed on the first electronic device, and skipping displaying the third icon on the first electronic device.

13. The method according to any one of claims 1 to 12, wherein the method further comprises:
obtaining information about a fourth application and information about a fifth application, wherein the fourth application and the fifth application are installed on the second electronic device, and a fourth icon of the fourth application and a fifth icon of the fifth application are displayed in a same folder of the second electronic device; and
displaying a folder on the home screen of the first electronic device, wherein the folder comprises a sixth icon of the fourth application and a seventh icon of the fifth application.

14. An electronic device, comprising one or more processors, one or more memories, and a display, wherein
the one or more memories store one or more computer programs, the one or more computer programs comprise instructions, and when the instructions are executed by the one or more processors, the electronic device is enabled to perform the method according to any one of claims 1 to 13.

15. A computer-readable storage medium, comprising computer instructions, wherein when the computer instructions are run on an electronic device, the electronic device is enabled to perform the method according to any one of claims 1 to 13.

16. A computer program, wherein when the computer program is run on a computer, the computer is enabled to perform the method according to any one of claims 1 to 13.

17. A computer program product, wherein when the computer program product runs on a computer, the computer is enabled to perform the method according to any one of claims 1 to 13.
